Europäisches Patentamt

European Patent Office

Office européen des brevets

(19)

(11) **EP 1 718 081 A1**

(12) **EUROPEAN PATENT APPLICATION**
published in accordance with Art. 158(3) EPC

(43) Date of publication:
02.11.2006 Bulletin 2006/44

(51) Int Cl.:
*H04N 9/07* $^{(2006.01)}$

(21) Application number: 05710214.7

(86) International application number:
PCT/JP2005/002263

(22) Date of filing: 15.02.2005

(87) International publication number:
WO 2005/081543 (01.09.2005 Gazette 2005/35)

(84) Designated Contracting States:
DE FR GB

(30) Priority: 19.02.2004 JP 2004043595

(71) Applicant: Olympus Corporation
Tokyo 151-0072 (JP)

(72) Inventor: TSURUOKA, Takao
Shibuya-ku, Tokyo 1510072 (JP)

(74) Representative: von Hellfeld, Axel
Wuesthoff & Wuesthoff
Schweigerstrasse 2
81541 München (DE)

(54) **IMAGING SYSTEM AND IMAGE PROCESSING PROGRAM**

(57)    An image pickup system for processing an image signal where each pixel is composed of more than one color signals and at least one of the color signals are dropped out according to the location of the pixel, having an extraction section (13) for extracting a plurality of local regions including a target pixel from the image signal; a noise estimation section (14) for estimating the noise amount for each local region extracted by the extraction section (13); first to third interpolation sections (17) to (19) respectively for interpolating, by means of mutually different interpolation processing, missing color signals of the target pixel; an interpolation selection section (16) for selecting which of the first to third interpolation sections (17) to (19) is to be used on the basis of the noise amount estimated by the noise estimation section (14).

## FIG.1

**Description**

TECHNICAL FIELD

The present invention relates to an image pickup system and an image processing program that perform interpolation processing on image signal in which one or more color signals are missing depending on the pixel position.

BACKGROUND ART

Currently, generally marketed digital still cameras and video cameras and so forth that employ a single CCD as an image pickup system are mainstream. The single CCD is constituted with a color filter disposed at the front thereof and the types of color filters are broadly classified as complementary color systems and primary color systems depending on the type of color filter.

Regardless of whether the type of color filter is a complementary color system or a primary color system, single CCD with such a configuration is similar in that one color signal is assigned to one pixel. Therefore, in order to obtain all the color signals with respect to one pixel, processing to interpolate the missing color signals of the respective pixels must be performed.

The interpolation processing must be similarly performed, not only for a single CCD system of this kind, but also two CCD image pickup system or even three CCD image pickup system in which performs pixel shifting.

As the interpolation processing described as above, a technology that performs interpolation processing in a high correlation direction or low edge intensity level direction by detecting a correlation or edge appears in Japanese Patent Application Laid Open No. H7-236147, and Japanese Patent Application Laid Open No. H8-298670, for example.

Further, Japanese Patent Application Laid Open No. H11-220745 mentions a technology that removes the effects of noise by performing coring processing after detecting a correlation in horizontal and vertical directions and performs interpolation processing in a high correlation direction.

Because the interpolation processing that is performed by selecting the direction as appearing in Japanese Patent Application Laid Open No. H7-236147 and Japanese Patent Application Laid Open No. H8-298670 is performed by detecting the correlation direction or edge direction from a number of pixels in the neighborhood of the target pixel undergoing interpolation, an erroneous detection is readily produced due to random noise attributable to the image pickup element system. There is the problem that, when the direction detection fails, there is the secondary effect that the interpolation accuracy drops and artefacts are produced, and so forth.

Furthermore, the interpolation processing appearing Japanese Patent Application Laid Open No. H11-220745 reduces the effects of noise by performing coring processing after calculating the correlation from a source signal containing noise. However, because the effects of the noise component are amplified during the correlation calculation, even if the reduction processing is executed thereafter, there is the problem that the improvement effects drop. In addition, there is the problem that, although the parameters of the coring processing are supplied statically, because the randomnoise of the image pickup element system varies dynamically due to the primary factors of the signal level, temperature during photography, exposure time, and gain and so forth, the effects of noise cannot be suitably removed by parameters that are supplied statically.

The present invention is conceived in view of the above problem and an object of the present invention is to provide an image pickup system and an image processing program which make it possible to perform highly accurate interpolation in which the secondary effects of noise are reduced.

DISCLOSURE OF INVENTION

MEANS FOR SOLVING THE PROBLEM

In order to achieve the above object, the image pickup system of a first aspect of the invention is an image pickup system for processing an image signal where each pixel is composed of more than one color signals and at least one of the color signals are dropped out according to the location of the pixel, comprising: extraction means for extracting a plurality of local regions including a target pixel from the image signal; noise estimation means for estimating the noise amount for each local region extracted by the extraction means; a plurality of interpolation means for interpolating, by means of mutually different interpolation processing, missing color signals of the target pixel; interpolation selection means for selecting which of the plurality of interpolation means is to be used on the basis of the noise amount estimated by the noise estimation means.

Further, the image pickup system of a second aspect of the invention is an image pickup system for processing an image signal where each pixel is composed of more than one color signals and at least one of the color signals are dropped out according to the location of the pixel, comprising: extraction means for extracting one or more local regions including a target pixel from the image signal; noise estimation means for estimating the noise amount for each local region extracted by the extraction means; interpolation means for interpolating, by means of interpolation processing, missing color signals of the target pixel; and pixel selection means for selecting pixels to be used in the interpolation processing of the interpolation means on the basis of the noise amount estimated by the noise estimation means.

In addition, the image pickup system of a third aspect of the invention is an image pickup system for processing an image signal where each pixel is composed of more than one color signals and at least one of the color signals are dropped out according to the location of the pixel, comprising: extraction means for extracting a plurality of local regions including a target pixel from the image signal; noise estimation means for estimating the noise amount for each local region extracted by the extraction means; a plurality of interpolation means for interpolating, by means of mutually different interpolation processing, missing color signals in the target pixel; and interpolation pixel selection means for selecting which of the plurality of interpolation means is to be used, and for selecting pixels to be used in the interpolation processing of at least one of the plurality of interpolation means, on the basis of the noise amount estimated by the noise estimation means.

The image pickup system of a fourth aspect of the invention is the image pickup system of the first to third aspects of the invention, further comprising: an image pickup element system that generates the image signal and, if necessary, amplifies the image signal, wherein the noise estimation means is constituted comprising: separation means for separating the image signal of the local regions into each of the predetermined number of color signals; parameter calculation means for calculating, as a parameter, at least one of the average value of the respective color signals separated by the separation means, the temperature of the image pickup element system, and the gain of the amplification of the image signal obtained by the image pickup system; and noise amount calculation means for calculating, for each of the predetermined number of color signals, the noise amount of the color signal on the basis of the parameter calculated by the parameter calculation means.

The image pickup system of a fifth aspect of the invention is the image pickup system of the fourth aspect of the invention, wherein the noise amount calculation means calculates, for each of the predetermined number of color signals, the noise amount $N$ of the color signals by using, as parameters, the average value $L$ of the respective color signals, the temperature $T$ of the image pickup element system, and the gain $G$ of the amplification of the image signal by the image pickup element system, the noise amount calculation means being constituted comprising: supply means for supplying standard parameter values for the parameters not obtained by the parameter calculation means among the average value $L$, the temperature $T$, and the gain $G$; coefficient calculation means for calculating, by using three functions $a(T,G)$, $b(T,G)$, and $c(T,G)$ with the temperature $T$ and the gain $G$ as the parameters, coefficients $A$, $B$, and $C$ that correspond with the three functions respectively; and function computation means for computing the noise amount $N$ on the basis of a first functional equation $N=AL^B+C$ or a second functional equation $N=AL^2+BL+C$ by using the three coefficients $A$, $B$, and $C$ found by the coefficient calculation means.

The image pickup system of a sixth aspect of the invention is the image pickup system of the fourth aspect of the invention,
wherein the noise amount calculation means calculates, for each of the predetermined number of color signals, the noise amount $N$ of the color signals by using, as parameters, the average value of the respective color signals, the temperature of the image pickup element system, and the gain of the amplification of the image signal by the image pickup element system, the noise amount calculation means being constituted comprising: supply means for supplying standard parameter values for the parameters not obtained by the parameter calculation means among the average value, temperature, and the gain; and lookup table means for finding the noise amount on the basis of the average value, the temperature, and the gain obtained by the parameter calculation means or the supply means.

The image pickup system of a seventh aspect of the invention is the image pickup system of the first to third aspects of the invention, further comprising: edge extraction means for extracting edge intensities related to a plurality of predetermined directions centered on the target pixel within the local regions, wherein the interpolation means is constituted comprising: weighting calculation means for calculating, with respect to each of the predetermined directions, a normalized weighting coefficient by using the edge intensities related to the plurality of predetermined directions extracted by the edge extraction means; interpolated signal calculation means for calculating interpolated signals related to the plurality of predetermined directions centered on the target pixel within the local regions; and computation means for computing missing color signals of the target pixel on the basis of the plurality of weighting coefficients related to the predetermined directions and the interpolated signals related to the predetermined directions.

The image pickup system of an eighth aspect of the invention is the image pickup system of the first to third aspects of the invention, wherein the interpolation means is constituted comprising correlation calculation means for calculating, as a linear equation, the correlation between the respective color signals in the local regions; and computation means for computing missing color signals of the target pixel from the image signal on the basis of the correlation calculated by the correlation calculation means.

The image pickup system of a ninth aspect of the invention is the image pickup system of the first or third aspect of the invention, wherein the interpolation means is constituted comprising computation means for computing missing color signals of the target pixel by performing linear interpolation or cubic interpolation within the local regions.

The image pickup system of a tenth aspect of the invention is the image pickup system of the first aspect of the invention, wherein the interpolation selection means is constituted comprising: comparing means for comparing the noise amount estimated by the noise estimation means and a predetermined statistic obtained from the respective color signalsof the local regions; and labeling means for performing labeling to indicate whether the local regions are effective or ineffective on the basis of the result of the comparison by the comparing means; the interpolation selection means selecting which of the plurality of interpolation means is to be used in accordance with the label provided by the labeling means.

The image pickup system of an eleventh aspect of the invention is the image pickup system of the first aspect of the invention, wherein the interpolation selection means is constituted comprising: comparing means for comparing the noise amount estimated by the noise estimation means and a predetermined threshold value; and labeling means for performing labeling to indicate whether the local regions are effective or ineffective on the basis of the result of the comparison by the comparing means; the interpolation selection means selecting which of the plurality of interpolation means is to be used in accordance with the label provided by the labeling means.

The image pickup system of a twelfth aspect of the invention is the image pickup system of the second aspect of the invention, wherein the pixel selection means is constituted comprising: permissible range setting means for setting the permissible range on the basis of the noise amount estimated by the noise estimation means and the average value of the respective color signals; and labeling means for performing labeling to indicate whether the respective pixels in the local regions are effective or ineffective on the basis of the permissible range; the pixel selection means selecting the pixels to be used in the interpolation processing of the interpolation means in accordance with the label provided by the labeling means.

The image pickup system of a thirteenth aspect of the invention is the image pickup system of the third aspect of the invention, wherein the interpolation pixel selection means is constituted comprising: comparing means for comparing the noise amount estimated by the noise estimation means and a predetermined statistic obtained from the respective color signals of the local regions; permissible range setting means for setting the permissible range on the basis of the noise amount and the average value of the respective color signals; and labeling means for performing labeling to indicate whether the local regions are effective or ineffective and for performing labeling to indicate whether each of the pixels in the local regions is effective or ineffective, on the basis of the result of the comparison by the comparing means and the permissible range set by the permissible range setting means; and the interpolation pixel selection means selects which of the plurality of interpolation means is used and selects the pixels to be used in the interpolation processing of at least one of the plurality of interpolation means, in accordance with the label provided by the labeling means.

The image pickup system of a fourteenth aspect of the invention is the image pickup system of the third aspect of the invention, wherein the interpolation pixel selection means is constituted comprising: comparing means for comparing the noise amount estimated by the noise estimation means and a predetermined threshold value; permissible range setting means for setting the permissible range on the basis of the noise amount and the average value of the respective color signals; and labeling means for performing labeling to indicate whether the local regions are effective or ineffective and for performing labeling to indicate whether the respective pixels in the local regions are effective or ineffective, on the basis of the result of the comparison by the comparing means and the permissible range set by the permissible range setting means; the interpolation pixel selection means selecting which of the plurality of interpolation means is to be used and selects the pixels to be used in the interpolation processing in at least one of the plurality of interpolation means, in accordance with the label provided by the labeling means.

The image pickup system of a fifteenth aspect of the invention is the image pickup system of the first or third aspect of the invention, further comprising: control means for performing control to allow the plurality of interpolation means to be desirably selected and to cause missing color signals to be interpolated by means of the selected interpolation means.

The image pickup system of a sixteenth aspect of the invention is the image pickup system of the fifteenth aspect of the invention, wherein the control means is constituted comprising information acquiring means for acquiring at least one of image quality information and photographic mode information related to the image signal.

The image pickup system of a seventeenth aspect of the invention is the image pickup system of the second or third aspect of the invention, further comprising: control means for controlling the interpolation means to allow the pixels to be used in the interpolation processing of the interpolation means to be desirably selected and to cause missing color signals to be interpolated by means of the selected pixels.

An image processing program of an eighteenth aspect of the invention is an image processing program for processing an image signal where each pixel is composed of more than one color signals and at least one of the color signals are dropped out according to the location of the pixel, wherein the image processing program causes the computer to function as: extraction means for extracting a plurality of local regions including a target pixel from the image signal; noise estimation means for estimating the noise amount for each local region extracted by the extraction means; a plurality of interpolation means for interpolating, by means of mutually different interpolation processing, missing color signals of the target pixel; and interpolation selection means for selecting which of the plurality of interpolation means is to be used on the basis of the noise amount estimated by the noise estimation means.

The image processing program of a nineteenth aspect of the invention is an image processing program for processing an image signal where each pixel is composed of more than one color signals and at least one of the color signals are dropped out according to the location of the pixel, wherein the image processing program causes the computer to function as: extraction means for extracting one or more local regions including a target pixel from the image signal; noise estimation means for estimating the noise amount for each local region extracted by the extraction means; interpolation means for interpolating, by means of interpolation processing, missing color signals of the target pixel; and pixel selection means for selecting the pixels to be used in the interpolation processing of the interpolation means on the basis of the noise amount estimated by the noise estimation means.

The image processing program of a twentieth aspect of the invention is an image processing program for processing an image signal where each pixel is composed of more than one color signals and at least one of the color signals are dropped out according to the location of the pixel, wherein the image processing program causes the computer to function as: extraction means for extracting a plurality of local regions including a target pixel from the image signal; noise estimation means for estimating the noise amount for each local region extracted by the extraction means; a plurality of interpolation means for interpolating, by means of mutually different interpolationprocessing, missing color signals of the target pixel; and interpolation pixel selection means for selecting which of the plurality of interpolation means is to be used and for selecting the pixels to be used in the interpolation processing of at least one of the plurality of interpolation means, on the basis of the noise amount estimated by the noise estimation means.

The image processing program of a twenty-first aspect of the invention is the image processing program of the eighteenth aspect of the invention, wherein the interpolation selection means comprises: comparing means for comparing the noise amount estimated by the noise estimation means and a predetermined statistic obtained from the respective color signals of the local regions; and labeling means for performing labeling to indicate whether the local regions are effective or ineffective on the basis of the result of the comparison by the comparing means; the interpolation selection means causing a computer to select which of the plurality of interpolation means is to be used in accordance with the label provided by the labeling means.

The image processing program of a twenty-second aspect of the invention is the image processing program of the eighteenth aspect of the invention, wherein the interpolation selection means comprises: comparing means for comparing the noise amount estimated by the noise estimation means and a predetermined threshold value; and labeling means for performing labeling to indicate whether the local regions are effective or ineffective on the basis of the result of the comparison by the comparing means; the interpolation selection means causing a computer to select which of the plurality of interpolation means is used in accordance with the label provided by the labeling means.

The image processing program of a twenty-third aspect of the invention is the image processing program of the nineteenth aspect of the invention, wherein the pixel selection means comprises: permissible range setting means for setting the permissible range on the basis of the noise amount estimated by the noise estimation means and the average value of the respective color signals; and labeling means for performing labeling to indicate whether the respective pixels in the local regions are effective or ineffective on the basis of the permissible range; the interpolation selection means causing a computer to select the pixels to be used in the interpolation processing of the interpolation means in accordance with the label provided by the labeling means.

The image processing program of a twenty-fourth aspect of the invention is the image processing program of the twentieth aspect of the invention, wherein the interpolation pixel selection means comprises: comparing means for comparing the noise amount estimated by the noise estimation means and a predetermined statistic obtained from the respective color signals of the local regions; permissible range setting means for setting the permissible range on the basis of the noise amount and the average value of the respective color signals; and labeling means for performing labeling to indicate whether the local regions are effective or ineffective and for performing labeling to indicate whether the respective pixels in the local regions are effective or ineffective, on the basis of the result of the comparison by the comparing means and the permissible range set by the permissible range setting means; the interpolation pixel selection means causing a computer to select which of the plurality of interpolation means is to be used and to select the pixels to be used in the interpolation processing of at least one of the plurality of interpolation means, in accordance with the label provided by the labeling means.

The image processing program of a twenty-fifth aspect of the invention is the image processing program of the twentieth aspect of the invention, wherein the interpolation pixel selection means comprises: comparing means for comparing the noise amount estimated by the noise estimation means and a predetermined threshold value; permissible range setting means for setting the permissible range on the basis of the noise amount and the average value of the respective color signals; and labeling means for performing labeling to indicate whether the local regions are effective or ineffective and for performing labeling to indicate whether the respective pixels in the local regions are effective or ineffective, on the basis of the result of the comparison by the comparing means and the permissible range set by the permissible range setting means; the interpolation pixel selection means causing a computer to select which of the plurality of interpolation means is to be used and to select the pixels to be used in the interpolation processing in at least one of the plurality of interpolation means, in accordance with the label provided by the labeling means.

BRIEF DESCRIPTION OF THE DRAWINGS

Fig. 1 is a block diagram showing the constitution of an image pickup system according to a first embodiment of the present invention;
Fig. 2 shows the disposition of color filters in a basic block of 10x10 pixels according to the first embodiment;
Fig. 3 shows a rectangular block of 6x6 pixels according to the first embodiment;
Fig. 4 shows an upper block and lower block of 6x4 pixels according to the first embodiment;
Fig. 5 shows a left block and a right block of 4x6 pixels according to the first embodiment;
Fig. 6 shows a horizontal block and a vertical block according to the first embodiment;
Fig. 7 shows a +45 degree block and a -45 degree block according to the first embodiment;
Fig. 8 is a block diagram showing the constitution of a noise estimation section according to the first embodiment;
Fig. 9 is a graph showing the relationship of the amount of noise with respect to the signal level according to the first embodiment;
Fig. 10 is a graph showing the relationship of the amount of noise with respect to the signal level, temperature, and gain according to the first embodiment;
Fig. 11 is a graph showing an overview of an aspect in which a parameter A used in the noise calculation varies with respect to the temperature and gain according to the first embodiment;
Fig. 12 is a graph showing an overview of an aspect in which a parameter B used in the noise calculation varies with respect to the temperature and gain according to the first embodiment;
Fig. 13 is a graph showing an overview of an aspect in which a parameter C used in the noise calculation varies with respect to the temperature and gain according to the first embodiment;
Fig. 14 is a block diagram showing the constitution of an interpolation selection section according to the first embodiment;
Fig. 15 is a block diagram showing the constitution of a first interpolation section according to the first embodiment;
Fig. 16 shows the pixel disposition of the extraction block used in the interpolation by means of the first interpolation section according to the first embodiment;
Fig. 17 shows the pixel disposition used in G interpolation of position $R_{44}$ by means of the first interpolation section according to the first embodiment;
Fig. 18 shows the pixel disposition used in G interpolation of position $B_{55}$ by means of the first interpolation section according to the first embodiment;
Fig. 19 shows the pixel disposition used in R, B interpolation of position $G_{45}$ by means of the first interpolation section according to the first embodiment;
Fig. 20 shows the pixel disposition used in R, B interpolation of position $G_{54}$ by means of the first interpolation section according to the first embodiment;
Fig. 21 shows the pixel disposition used in B interpolation of position $R_{44}$ by means of the first interpolation section according to the first embodiment;
Fig. 22 shows the pixel disposition used in R interpolation of position $B_{55}$ by means of the first interpolation section according to the first embodiment;
Fig. 23 is a block diagram of the constitution of a second interpolation section according to the first embodiment;
Fig. 24 is a block diagram of the constitution of a third interpolation section according to the first embodiment;
Fig. 25 is a flow chart of the overall processing of the image processing program according to the first embodiment;
Fig. 26 is a flow chart of the noise estimation processing of the image processing program according to the first embodiment;
Fig. 27 is a flow chart of first interpolation processing of the image processing program according to the first embodiment;
Fig. 28 is a flow chart of second interpolation processing of the image processing program according to the first embodiment;
Fig. 29 is a block diagram showing the constitution of the image pickup system of a second embodiment of the present invention;
Fig. 30 shows the disposition of color filters of a basic block of 6x6 pixels extracted by the extraction section, according to the second embodiment;
Fig. 31 is a block diagram of the constitution of a noise estimation section according to the second embodiment;

Fig. 32 is a block diagram of the constitution of a pixel selection section according to the second embodiment;

Fig. 33 is a flow chart of processing by the image processing program according to the second embodiment;

Fig. 34 is a block diagram showing the constitution of the image pickup system according to a third embodiment of the present invention; and

Fig. 35 is a flow chart of processing by the image processing program according to the third embodiment.

BEST MODE FOR CARRYING OUT THE INVENTION

Embodiments of the present invention will be described hereinbelow with reference to the drawings.

First embodiment

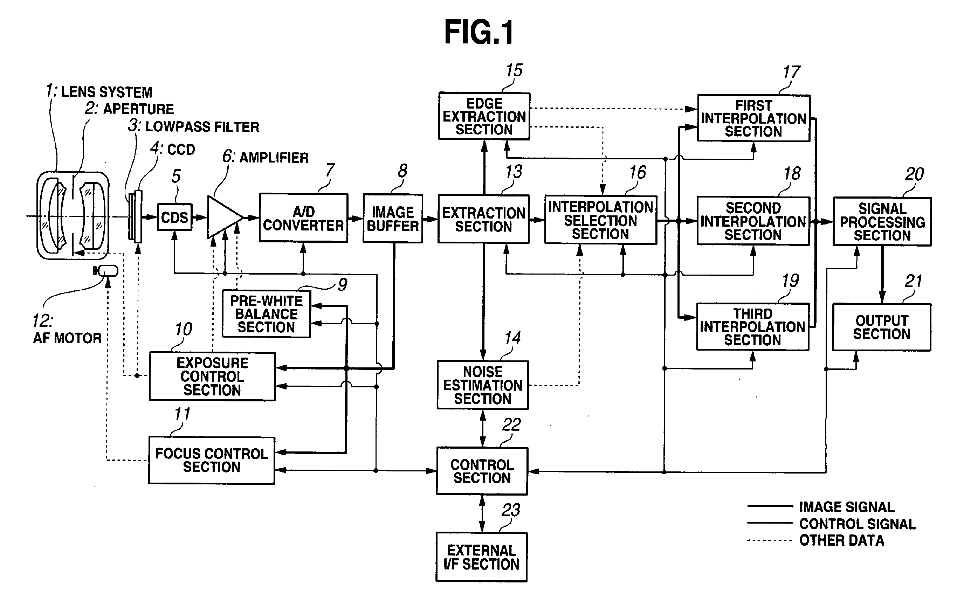

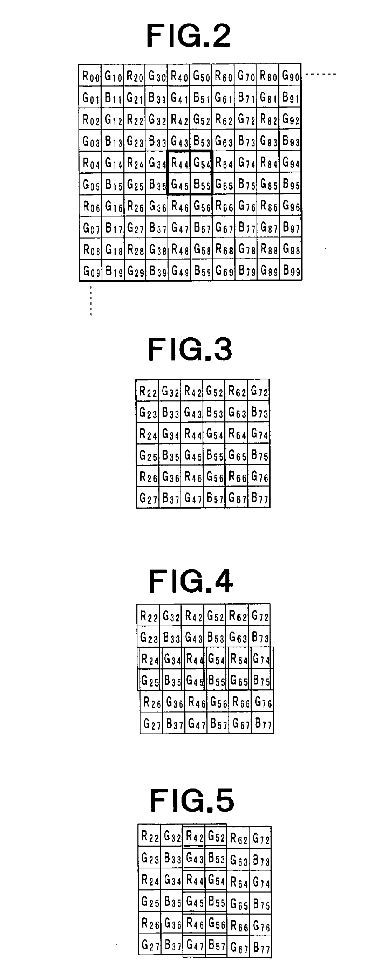

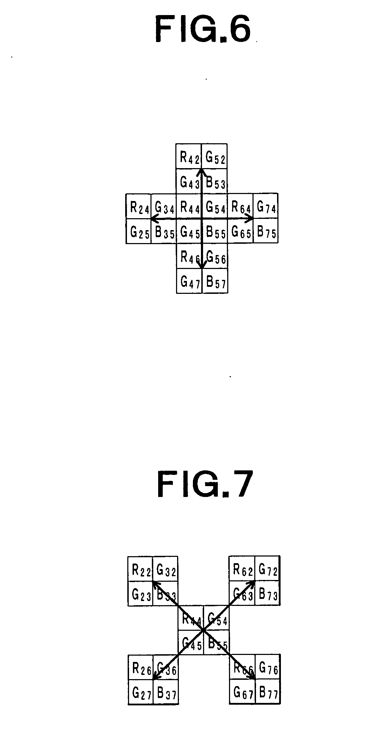

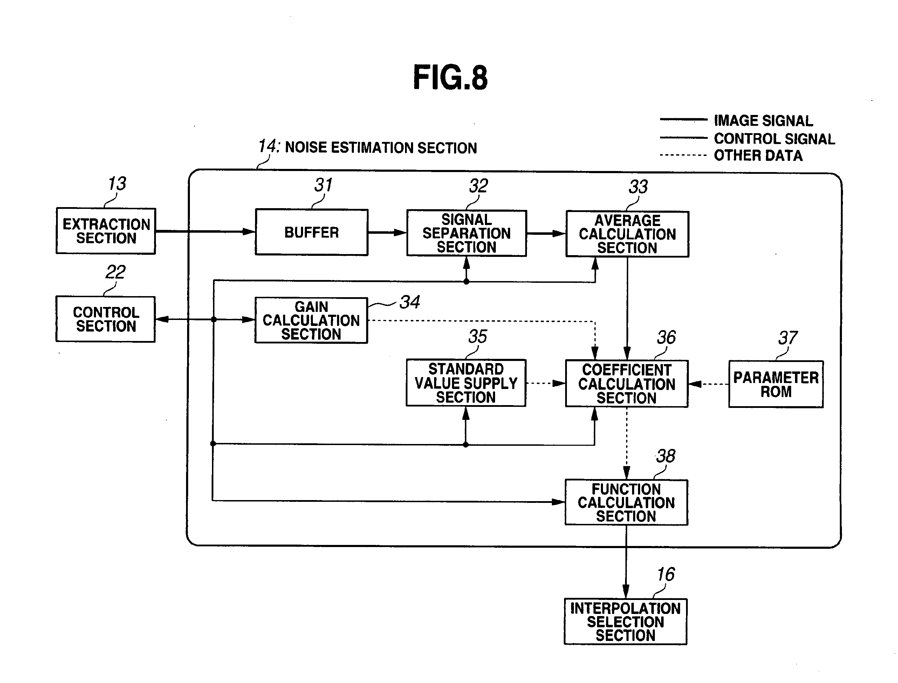

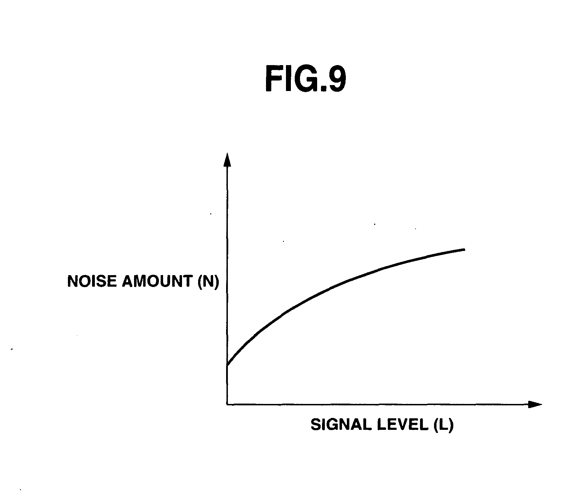

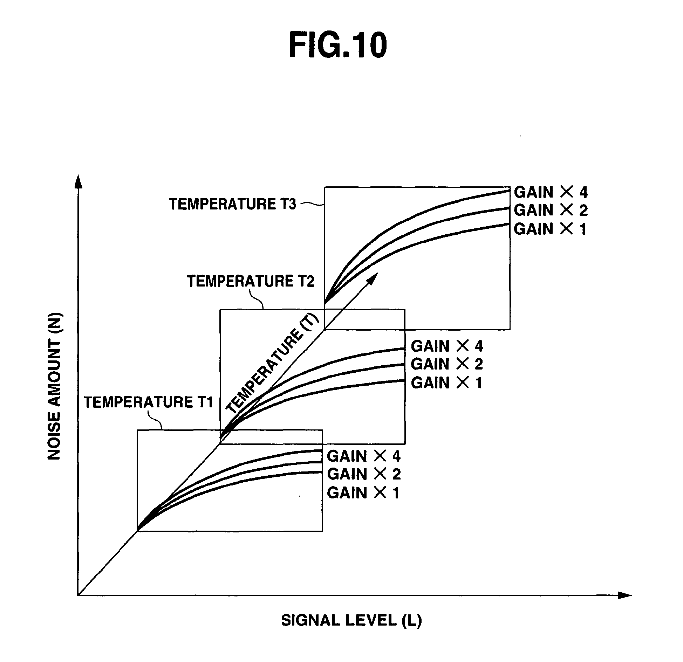

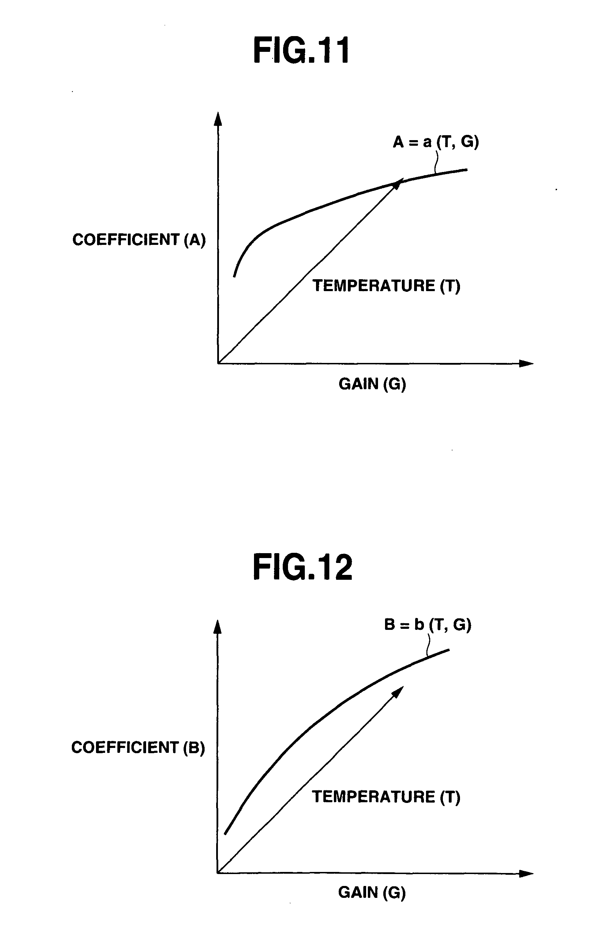

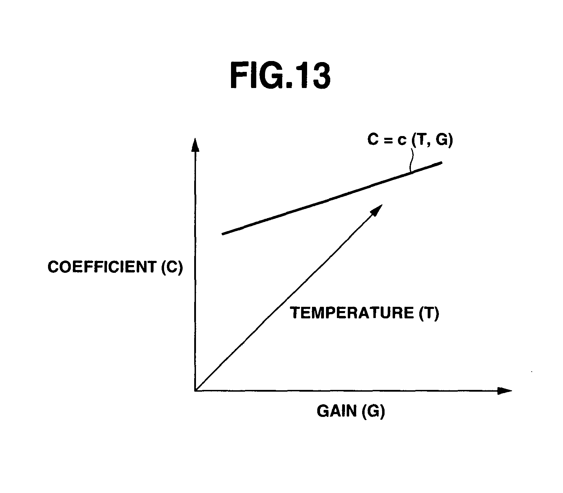

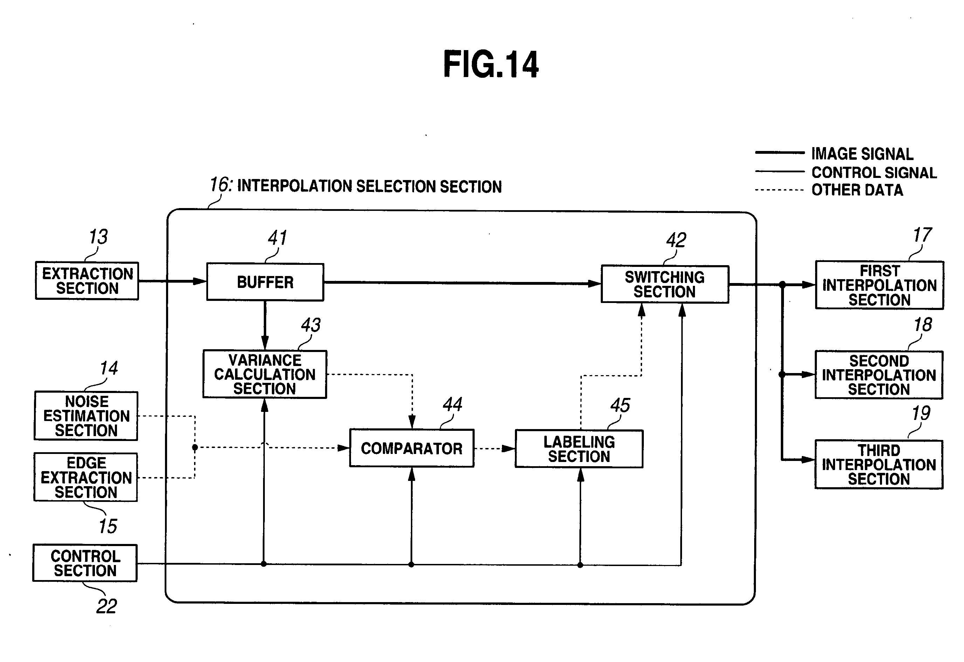

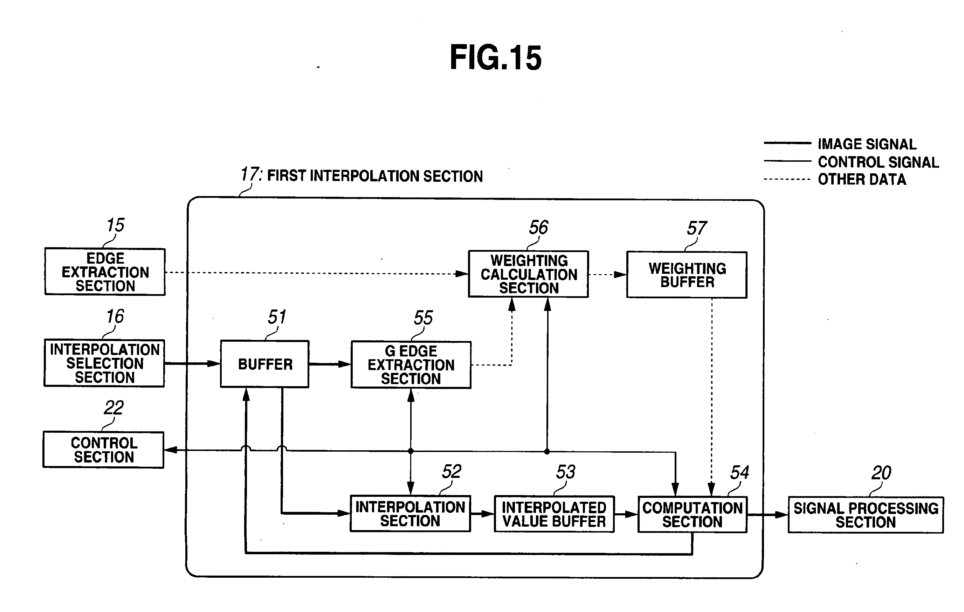

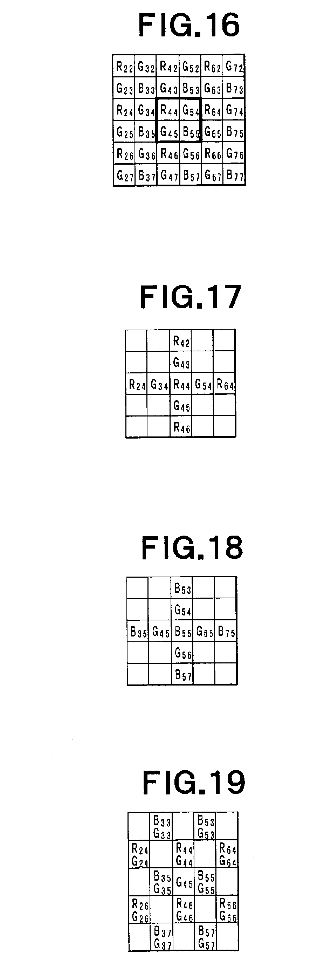

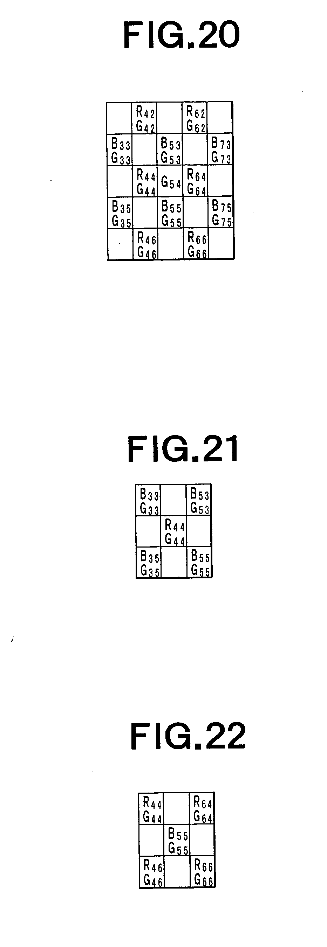

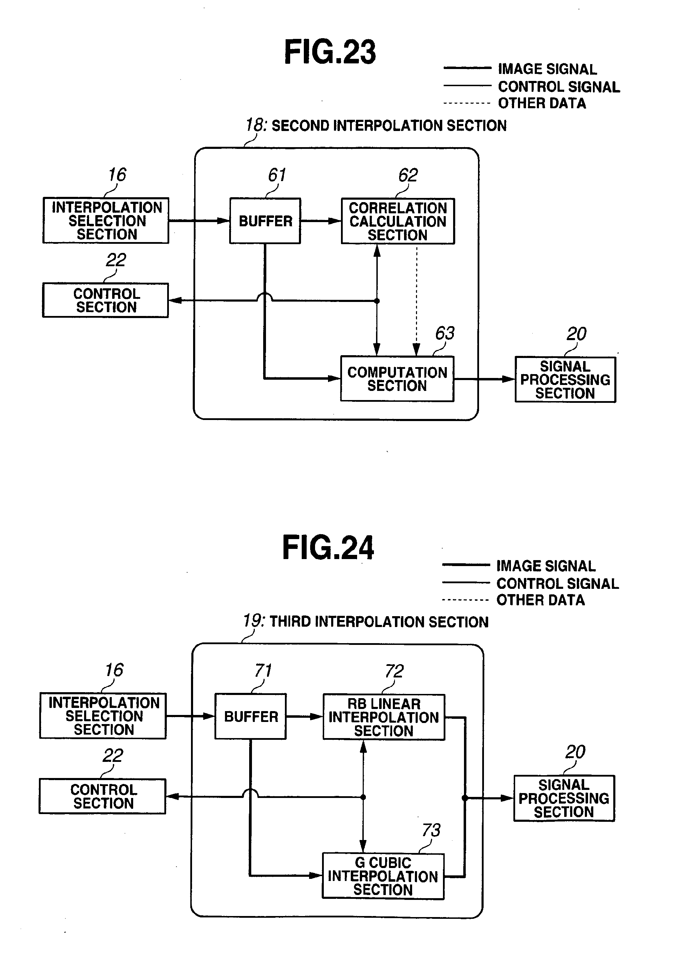

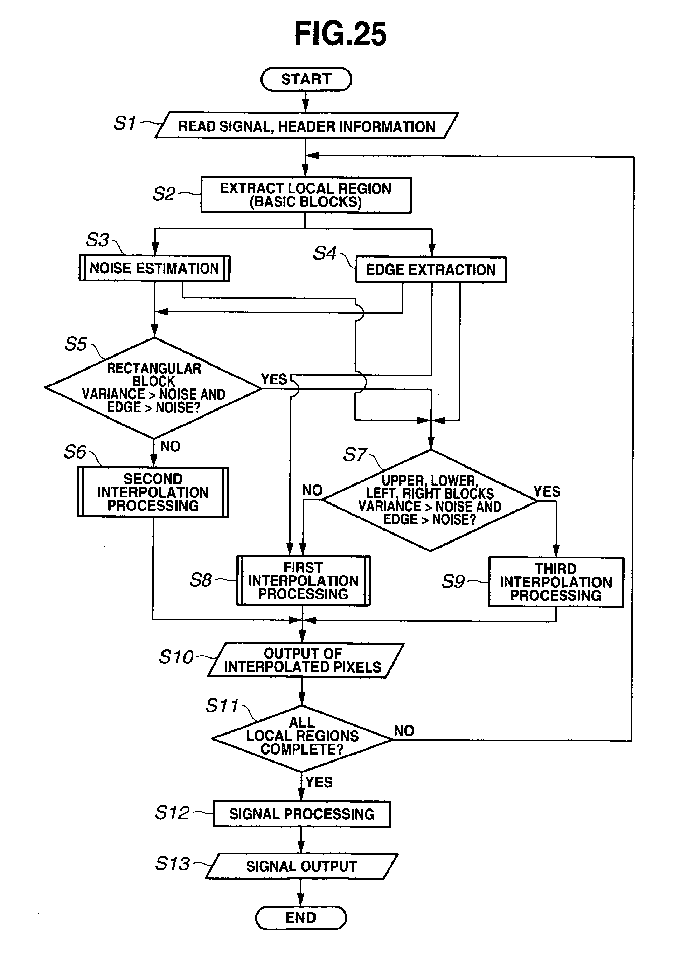

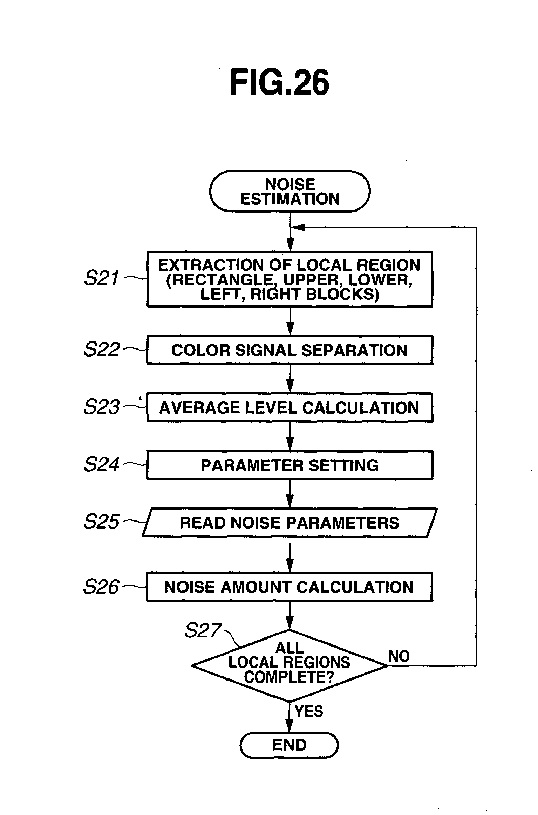

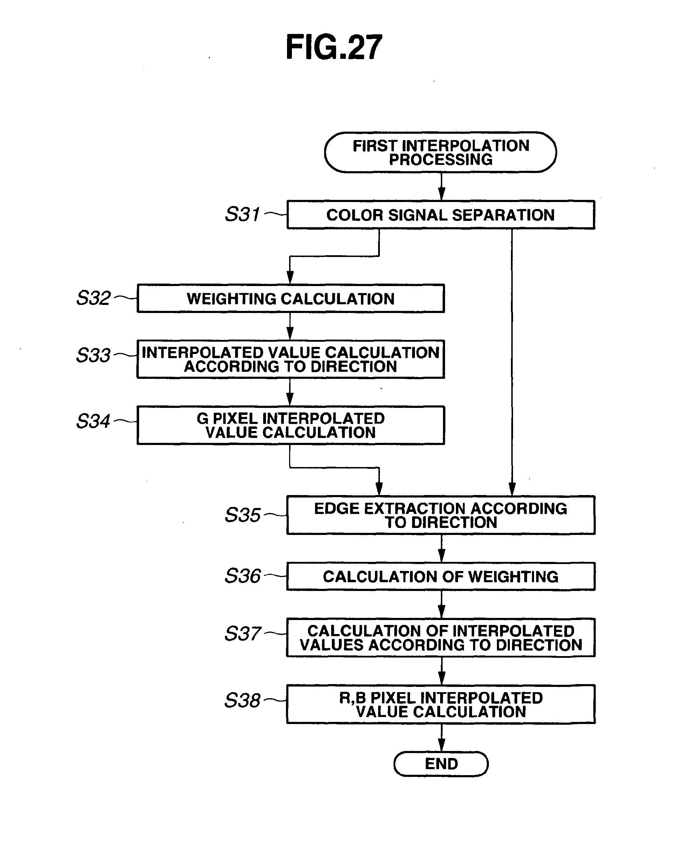

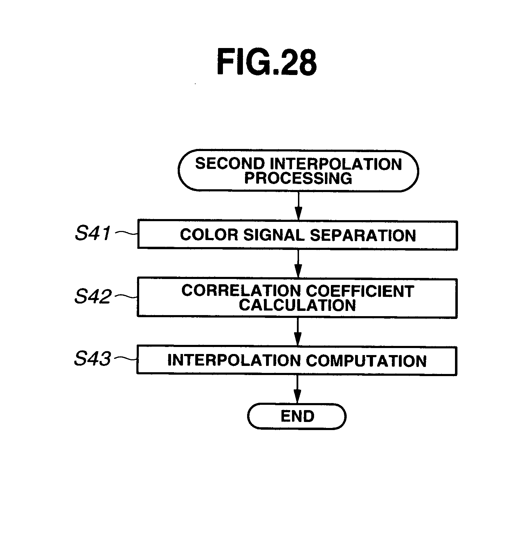

Figs. 1 to 28 illustrate the first embodiment of the present invention. Fig. 1 is a block diagram showing the constitution of an image pickup system; Fig. 2 shows the disposition of color filters in a basic block of $10 \times 10$ pixels; Fig. 3 shows a rectangular block of 6x6 pixels; Fig. 4 shows an upper block and lower block of 6x4 pixels; Fig. 5 shows a left block and a right block of $4 \times 6$ pixels; Fig. 6 shows a horizontal block and a vertical block; Fig. 7 shows a +45 degree block and a -45 degree block; Fig. 8 is a block diagram showing the constitution of a noise estimation section; Fig. 9 is a graph showing the relationship of the amount of noise with respect to the signal level; Fig. 10 is a graph showing the relationship of the amount of noise with respect to the signal level, temperature, and gain; Fig. 11 is a graph showing an overview of an aspect in which a parameter A used in the noise calculation varies with respect to the temperature and gain; Fig. 12 is a graph showing an overview of an aspect in which a parameter B used in the noise calculation varies with respect to the temperature and gain; Fig. 13 is a graph showing an overview of an aspect in which a parameter C used in the noise calculation varies with respect to the temperature and gain; Fig. 14 is a block diagram showing the constitution of an interpolation selection section; Fig. 15 is a block diagram showing the constitution of a first interpolation section; Fig. 16 shows the pixel disposition of the extraction block used in the interpolation by means of the first interpolation section; Fig. 17 shows the pixel disposition used in G interpolation of position $R_{44}$ by means of the first interpolation section; Fig. 18 shows the pixel disposition used in G interpolation of position $B_{55}$ by means of the first interpolation section; Fig. 19 shows the pixel disposition used in R, B interpolation of position $G_{45}$ by means of the first interpolation section; Fig. 20 shows the pixel disposition used in R, B interpolation of position $G_{54}$ by means of the first interpolation section; Fig. 21 shows the pixel disposition used in B interpolation of position $R_{44}$ by means of the first interpolation section; Fig. 22 shows the pixel disposition used in R interpolation of position $B_{55}$ by means of the first interpolation section; Fig. 23 is a block diagram of the constitution of a second interpolation section; Fig. 24 is a block diagram of the constitution of a third interpolation section; Fig. 25 is a flow chart of the overall processing of the image processing program; Fig. 26 is a flow chart of the noise estimation processing of the image processing program; Fig. 27 is a flowchart of first interpolation processing of the image processing program; and Fig. 28 is a flow chart of second interpolation processing of the image processing program.

The image pickup system is constituted as shown in Fig. 1.

A lens system 1 serves to form a subject image.

An aperture 2 is disposed in the lens system 1 and serves to regulate the transmission range of the luminous flux in the lens system 1.

A lowpass filter 3 serves to eliminate an unnecessary high frequency component from the luminous flux which has been formed into an image by the lens system 1.

A single CCD 4 constituting an image pickup element photoelectric converts an optical subject image formed via the low pass filter 3 and outputs an electrical image signal.

CDS (Correlated Double Sampling) 5 performs processing correlated double sampling on the image signal output by the CCD 4.

An amplifier 6 amplifies the output of the CDS5 in accordance with a predetermined amplification factor.

An A/D converter 7 converts an analog image signal output by the CCD 4 into a digital signal.

An image buffer 8 temporarily stores digital image data that is output by the A/D converter 7.

A pre-white balance section 9 calculates a simple white balance coefficient by adding up signals of a predetermined luminance level in the image signal for each color signal on the basis of image data stored in the image buffer 8. The simple white balance coefficient calculated by the pre-white balance section 9 is output to the amplifier 6. The amplifier 6 adjusts the white balance simply by adjusting the amplification factor of each color component in accordance with the simple white balance coefficient on the basis of the control of a control section 22.

An exposure control section 10 performs a measured light evaluation related to the subject on the basis of image data stored in the image buffer 8, and controls the aperture 2, the CCD 4, and the amplifier 6 on the basis of the evaluation result. That is, the exposure control section 10 performs exposure control by adjusting the aperture value of the aperture 2, the electronic shutter speed of the CCD 4, and the amplification factor of the amplifier 6.

A focus control section 11 performs focused focal point detection on the basis of image data stored in the image buffer 8 and drives an AF motor 12 (described subsequently) based on the detection result.

The AF motor 12 is controlled by the focus control section 11 and performs driving of a focus lens or the like contained in the lens system 1 so that a subject image is formed on the image pickup plane of the CCD 4.

An extraction section 13 serves as extraction means and extracts and outputs an image signal of a predetermined region from image data stored in the image buffer 8.

A noise estimation section 14 estimates noise from the image signal of the predetermined region extracted by the extraction section 13.

An edge extraction section 15 serves as edge extraction means and extracts an edge component from the image signal of a predetermined region extracted by the extraction section 13.

An interpolation selection section 16 serves as interpolation pixel selection means and interpolation selection means, and selects which of interpolation processings of a first interpolation section 17, a second interpolation section 18, and a third interpolation section 19 (described subsequently) is to be performed on the image signal of a predetermined region extracted by the extraction section 13 on the basis of noise estimated by the noise estimation section 14 and the edge component extracted by the edge extraction section 15.

The first interpolation section 17 constituting interpolation means that performs the interpolation processing of missing color signal on image data stored in the image buffer 8 based on the edge direction being extracted by the edge extraction section 15 as will be described in detail later.

The second interpolation section 18 serves as interpolation means and performs missing color-signal interpolation processing on image data stored in the image buffer 8 based on color correlation.

The third interpolation section 19 serves as interpolation means and performs missing-color signal interpolation on image data stored in the image buffer 8 by performing linear interpolation processing and cubic interpolation processing.

A signal processing section 20 performs publicly known emphasis processing and compression processing and so forth on interpolated image data from the first interpolation section 17, second interpolation section 18, or third interpolation section 19.

An output section 21 outputs image data from the signal processing section 20 for the purpose of recording the image data on a memory card or the like, for example.

An external I/F section 23 constituting information acquiring means contained in the control means comprises an interface to a power supply switch, a shutter button, and a mode switch for setting various types of photographic modes such as for the switching of moving/still images or settings of compression ratio, the image size, or ISO sensitivity.

A control section 22, which serves as control means, parameter calculation means, and information acquisition means, is bidirectionally connected to the CDS 5, the amplifier 6, the A/D converter 7, the pre-white balance section 9, the exposure control section 10, the focus control section 11, the extraction section 13, the noise estimation section 14, the edge extraction section 15, the interpolation selection section 16, the first interpolation section 17, the second interpolation section 18, the third interpolation section 19, the signal processing section 20, the output section 21, and the external I/F section 23, and centrally controls the image pickup system including abovementioned sections. The control section 22 is constituted of a microcomputer, for example.

Next, the color layout of the color filters disposed on the front surface of the CCD 4 will be described reference to Fig. 2.

In the present embodiment, a single CCD image pickup system that comprises color filters of a primary color system is assumed. For example, primary color Bayer-type color filters as shown in Fig. 2 are disposed in front of the CCD 4.

The primary-color Bayer-type color filter has a basic layout of 2x2 pixels in which two G (green) pixels are disposed in a diagonal direction and R (red) and B (blue) are each arranged as the two other pixels. This basic layout is repeated in two dimensions vertically and horizontally direction, so that the respective pixels on the CCD 4 are covered, thus forming a filter layout such as that shown in Fig. 2.

Thus, the image signal obtained from the image pickup system comprising single CCD primary color system is one color signal at each pixel which is composed of three colors signals and two color signals are missing according to the location of the pixel (that is, two color components other than that of the disposed color filter are missing).

Subsequently, the flow of the signals of the image pickup system shown in Fig. 1 will be described.

The image pickup system is constituted to enable the user to set the compression ratio (image quality information), image size (image quality information), ISO sensitivity, still image photography/moving image photography (photographic mode information), character image photography (photographic mode information) and so forth via the external I/F section 23. After these settings have been made, the pre shooting mode is entered by half pressing a shutter button formed by a two stage press button switch.

The image signal that is picked up by the CCD4 via the lens 1, aperture 2, and lowpass filter 3 undergoes well-known correlated double sampling by means of the CDS5.

The analog signal processed by the CDS5 is converted into a digital signal by means of the A/D converter 7 after being amplified by a predetermined amount by the amplifier 6, and then transferred to the image buffer 8.

The image signal in the image buffer 8 is subsequently transferred to the pre-white balance section 9, the exposure control section 10, and the focus control section 11.

The pre-white balance section 9 calculates a simple white balance coefficient by adding together, for each color signal, signals of a predetermined luminance level in the image signal. Further, the amplifier 6 performs, on the basis of the control of the control section 22, processing to obtain the white balance by performing multiplication by means of a different gain for each color signal in accordance with the simple white balance coefficient transferred from the pre-white balance section 9.

The exposure control section 10 determines the luminance level of the image signal, and controls an aperture value of the aperture 2, an electric shutter speed of the CCD 4, an amplification rate of the amplifier 6 and the like in consideration of the ISO sensitivity and shutter speed of the limit of image stability or the like, so that an appropriate exposure is obtained.

Further the focus control section 11 detects edge intensities in an image and controls the AF motor 12 to maximize the edge intensities, whereby a focused focal point image is obtained.

After the preparations for a real shooting have been made, the real shooting is performed by implementing this pre shooting mode and when the fact that the shutter button has been fully pressed is detected via the external I/F section 23.

The real shooting is performed on the basis of the white balance coefficient found by the pre-white balance section 9, the exposure conditions found by the exposure control section 10, and the focused focal point condition found by the focus control section 11, and the conditions during photography are transferred to the control section 22.

When the real shooting performing is done, the image signal is transferred to the image buffer 8 and stored as is the case during pre shooting.

The extraction section 13 extracts the image signal in the image buffer 8 in predetermined region units on the basis of the control of the control section 22 and transfers the image signal to the noise estimation section 14, the edge extraction section 15, and the interpolation selection section 16. Further, the predetermined region extracted by the extraction section 13 is assumed in this embodiment to be a basic block of $10 \times 10$ pixels as shown in Fig. 2. It is also assumed that the target pixels constituting the target of the interpolation processing are four pixels ($R_{44}$, $G_{54}$, $G_{45}$, $B_{55}$) which are 2x2 pixels located in the center of the basic block shown in Fig. 2. Therefore, the extraction of a predetermined region by the extraction section 13 is performed while moving the basic block of $10 \times 10$ pixels two pixels at a time in a horizontal or vertical direction (that is, while overlapping the basic block).

In addition, the extraction section 13 extracts each of a rectangular block as shown in Fig. 3 constituted of 6x6 pixels in the center of the basic block of 10x10 pixels, an upper block and a lower block as shown in Fig. 4 constituted of upper 6x4 pixels and lower $6 \times 4$ pixels in the rectangular block, a left block and right block as shown in Fig. 5 constituted of $4 \times 6$ pixels on the left and 4x6 pixels on the right in the rectangular block, and transfers each of the blocks in accordance with requirements to the noise estimation section 14 and the edge extraction section 15.

The noise estimation section 14 estimates the noise amount with respect to the region transferred from the extraction section 13 for each color signal, for each of the respective RGB color signals in this embodiment, on the basis of the control of the control section 22 and transfers the estimated results to the interpolation selection section 16. The estimation of the noise amount by the noise estimation section 14 at this time is performed for each of the upper and lower blocks shown in Fig. 4 and the left and right blocks shown in Fig. 5 after being performed for the rectangular block of 6x6 pixels shown in Fig. 3.

The edge extraction section 15 calculates the edge intensities in predetermined directions with respect to the rectangular blocks of 6x 6 pixels transferred from the extraction section 13, on the basis of the control of the control section 22 and transfers the results to the interpolation selection section 16 and first interpolation section 17.

Here, the edge extraction section 15 calculates forty-eight amounts as shown in the following equation 1 as the edge intensities with respect to the rectangular block of 6x6 pixels shown in Fig. 3 in this embodiment.

<u>Equation 1</u>

R horizontal direction $|R_{22} - R_{42}|$, $|R_{42} - R_{62}|$, $|R_{24} - R_{44}|$,

$|R_{44} - R_{64}|$, $|R_{26} - R_{46}|$, $|R_{46} - R_{66}|$

R vertical direction $|R_{22} - R_{24}|$, $|R_{24} - R_{26}|$, $|R_{42} - R_{44}|$,

$|R_{44} - R_{46}|$, $|R_{62} - R_{64}|$, $|R_{64} - R_{66}|$

G horizontal direction $|G_{32} - G_{52}|$, $|G_{52} - G_{72}|$, $|G_{23} - G_{43}|$,

$|G_{43} - G_{63}|$, $|G_{34} - G_{54}|$, $|G_{54} - G_{74}|$,

$|G_{25} - G_{45}|$, $|G_{45} - G_{65}|$, $|G_{36} - G_{56}|$,

$|G_{56} - G_{76}|$, $|G_{27} - G_{47}|$, $|G_{47} - G_{67}|$

G vertical direction $|G_{23} - G_{25}|$, $|G_{25} - G_{27}|$, $|G_{32} - G_{34}|$,

$|G_{34} - G_{36}|$, $|G_{43} - G_{45}|$, $|G_{45} - G_{47}|$,

$|G_{52} - G_{54}|$, $|G_{54} - G_{56}|$, $|G_{63} - G_{65}|$,

$|G_{65} - G_{67}|$, $|G_{72} - G_{74}|$, $|G_{74} - G_{76}|$

B horizontal direction $|B_{33} - B_{53}|$, $|B_{53} - B_{73}|$, $|B_{35} - B_{55}|$,

$|B_{55} - B_{75}|$, $|B_{37} - B_{57}|$, $|B_{57} - B_{77}|$

B vertical direction $|B_{33} - B_{35}|$, $|B_{35} - B_{37}|$, $|B_{53} - B_{55}|$,

$|B_{55} - B_{57}|$, $|B_{73} - B_{75}|$, $|B_{75} - B_{77}|$

Here, the symbol '| |' signifies an absolute value.

Thus, the edge intensities calculated as shown in the equation 1 are transferred to the interpolation selection section 16 and first interpolation section 17 by the edge extraction section 15. However, the edge intensities that the edge extraction section 15 transfers to the first interpolation section 17 are total eight amounts which are four amounts rendered by combining the R and G edge intensities as shown in the following equation 2 and four amounts rendered by combining the B and G edge intensities as shown in the following equation 3.

Equation 2

$$E_{R\ upper} = |R_{44} - R_{42}| + |G_{43} - G_{45}|$$

$$E_{R\ lower} = |R_{44} - R_{46}| + |G_{43} - G_{45}|$$

$$E_{R\ left} = |R_{44} - R_{24}| + |G_{34} - G_{54}|$$

$$E_{R\ right} = |R_{44} - R_{64}| + |G_{34} - G_{54}|$$

Equation 3

$$E_{B\ upper} = |B_{55} - R_{53}| + |G_{54} - G_{56}|$$

$$E_{B\ lower} = |B_{55} - R_{57}| + |G_{54} - G_{56}|$$

$$E_{B\ left} = |B_{55} - R_{35}| + |G_{45} - G_{65}|$$

$$E_{B\ right} = |B_{55} - R_{75}| + |G_{45} - G_{65}|$$

The interpolation selection section 16 on the basis of the control of the control section 22, judges whether the predetermined region is effective or ineffective in the interpolation processing on the basis of the noise amount from the noise estimation section 14, the edge intensities from the edge extraction section 15, and the variance of the respective internally calculated color signals, and selects any one of the first interpolation section 17, second interpolation section 18, and third interpolation section 19. The interpolation selection section 16 then transfers an image signal of a predetermined region transferred from the extraction section 13, namely, a basic block of $10 \times 10$ pixels of this embodiment, to the selected interpolation section.

When the image signal selected by the interpolation selection section 16 is transferred, any of the first interpolation section 17, second interpolation section 18, and third interpolation section 19 performs predetermined interpolation processing on the basis of the control of the control section 22 and transfers the interpolated signal to the signal processing section 20.

The processing in the abovementioned extraction section 13, the noise estimation section 14, the edge extraction section 15, the interpolation selection section 16, first interpolation section 17, second interpolation section 18, and the third interpolation section 19 are performed in synchronization with the predetermined region units on the basis of the control of the control section 22.

The signal processing section 20 performs publicly known emphasis processing and compression processing and so forth on the interpolated image signal on the basis of the control of the control section 22 and transfers the processed image signal to the output section 21.

The output section 21 records and saves the image signal transferred from the signal processing section 20 on a recording medium such as a memory card.

An example of the constitution of the noise estimation section 14 will be described next with reference to Fig. 8.

The noise estimation section 14 is constituted comprising a buffer 31, a signal separation section 32, an average calculation section 33, a gain calculation section 34, a standard value supply section 35, coefficient calculation section 36, a parameter ROM 37, and a function calculation section 38.

The buffer 31 temporarily stores an image signal of a predetermined region extracted by the extraction section 13.

The signal separation section 32 is separation means that separates the image signal stored in the buffer 31 into each color signal.

The average calculation section 33 is parameter calculation means that calculates the average value of the color signals separated by the signal separation section 32.

The gain calculation section 34 is parameter calculation means that calculates the amplification amount (gain) of the amplifier 6 on the basis of information related to the exposure conditions and white balance coefficient transferred from the control section 22.

When various parameters used by the coefficient calculation section 36 are inadequate, the standard value supply section 35 is supply means that supplies standard values for the inadequate parameters.

The coefficient calculation section 36 is coefficient calculation means and noise amount calculation means, wherein the coefficient calculation section 36 calculates the coefficient for estimating the noise amount of a predetermined region from three functions stored in the parameter ROM 37 (described later) on the basis of the signal level related to the average value of the color signals from the average calculation section 33, the gain from the gain calculation section 34 and temperature information on the image pickup element from the standard value supply section 35.

The parameter ROM 37 is coefficient calculation means that stores three functions (described subsequently) used by the coefficient calculation section 36.

The function calculation section 38 is function computation means and noise amount calculating means, wherein the function calculation section 38 uses a function formularized by using the coefficient that is calculated by the coefficient calculation section 36 as described subsequently, calculates the noise amount, and transfers the calculated noise amount to the interpolation selection section 16.

Further, the control section 22 is connected bidirectionally to the signal separation section 32, the average calculation section 33, the gain calculation section 34, the standard value supply section 35, the coefficient calculation section 36, and the function calculation section 38.

The operation of the noise estimation section 14 will be described next.

The extraction section 13 extracts signals of a predetermined size in a predetermined position from the image buffer 8 on the basis of the control of the control section 22 and transfers the signals to the buffer 31. In this embodiment, as described earlier, the extraction section 13 extracts a rectangular block of $6 \times 6$ pixels as shown in Fig. 3, an upper block and lower block of 6x4 pixels as shown in Fig. 4, and a left block and right block of $4 \times 6$ pixels as shown in Fig. 5. Hence, the noise estimation section 14 performs a noise amount estimation relating to regions of these five types.

The signal separation section 32 separates signals in a predetermined region stored in the buffer 31 into respective color signals (RGB color signals of three types in this embodiment) on the basis of the control of the control section 22 and transfers the separated color signals to the average calculation section 33.

The average calculation section 33 calculates the average value by reading color signals from the signal separation section 32 on the basis of the control of the control section 22 and transfers the average value to the coefficient calculation section 36 as the signal level of a predetermined region.

The gain calculation section 34 calculates the amplification amount (gain) of the amplifier 6 on the basis of information related to the exposure condition and white balance coefficient transferred from the control section 22 and trans f ers the amplification amount to the coefficient calculation section 36.

Further, the standard value supply section 35 transfers information relating to the average temperature of the CCD4 constituting the image pickup element to the coefficient calculation section 36.

Based on the following formulization, the coefficient calculation section 36 calculates a coefficient for estimating the noise amount of the predetermined region, with the signal level from the average calculation section 33, the gain from the gain calculation section 34, and temperature information on the image pickup element from the standard value supply section 35.

Here, the formulization of the noise amount will be described with reference to Figs. 9 and 10.

Fig. 9 plots the noise amount with respect to the signal level. The noise amount with respect to the signal level has the function shape shown in Fig. 9, for example, and can be approximated relatively favorably by using a power function or a second order function.

That is, supposing that the signal level is L and the noise amount is N, the noise amount can be formulized by using the following equation 4 or equation 5.

## Equation 4

$$N = AL^B + C$$

or

## Equation 5

$$N = AL^2 + BL + C$$

Here, A, B, and C are constant terms.

However, the noise amount N not only varies according to the signal level L but also changes in accordance with the temperature of the CCD4 constituting the image pickup element and the gain of the amplifier 6.

Fig. 10 plots an aspect in which the noise amount varies with respect to the signal level, temperature, and gain.

Fig. 10 shows an example in which the noise amount N varies with respect to the signal level L, for a plurality of gains G (1, 2 and 4 times in the example shown in the figures) at a plurality of temperatures T (temperatures T1, T2, and T3 in the example shown in the figures).

As illustrated in Fig. 10, it can be seen that individual curves have shapes that are approximated by equation 4 or 5, however the constant terms A, B, and C are different depending on the temperature and gain. Therefore, in consideration of the constant terms A, B, and C depend on the temperature T and gain G, if the equation 4 or 5 are formulized with the temperature T and gain G as parameters, the following equation 6 or 7 are obtained.

## Equation 6

$$N = a(T,G) L^{b(T,G)} + c(T,G)$$

## Equation 7

$$N = a(T,G) L^2 + b(T,G) L + c(T,G)$$

Here, a(T,G), b(T,G), and c(T,G) are functions in which temperature T and gain G are parameters.

Fig. 11, Fig. 12 and Fig. 13 each provide an overview of the characteristic of function a(T,G) in equation 6, function b (T,G) in equation 6, and function c (T,G) in equation 6 respectively.

Since these respective functions are two-variable function with the temperature T and the gain G as independent variables, Figs. 11 to 13 are plotted as three-dimensional coordinates curves and constitute curves in the plotted space. However, instead of illustrating a specific curved shape here, an aspect of a general characteristic variation is shown by using a curve lines.

Each of the constants A, B, and C are output by inputting the temperature T and gain G as parameters in such functions a, b, and c. Further, the specific shapes of these functions can be easily acquired by measuring the characteristic of an image pickup element system comprising the CCD4, CDS5, and amplifier 6 beforehand.

The three functions a(T,G), b(T,G), and c(T,G) above are recorded in the parameter ROM 37.

The coefficient calculation section 36 calculates the constants A, B, and C by using three functions that are recorded in the parameter ROM 37 with the temperature T and gain G serving as input parameters and transfers the calculation results to the function calculation section 38.

The function calculation section 38 determines the function shape for calculating the noise amount N by applying the respective coefficients A, B, and C calculated by the coefficient calculation section 36 to equation 4 or 5 and then calculates the noise amount N by means of the signal value level L output from the average calculation section 33 via the coefficient calculation section 36. The function calculation section 38 transfers the noise amount N thus calculated to the interpolation selection section 16.

Here, each of the parameters for the temperature T and gain G and so forth need not always be determined for each shooting operation. It is also possible to construct the system such that standard values relating arbitrary parameters are stored in the standard value supply section 35, and the calculation processing of the coefficient calculation section 36 is omitted by using the standard values read from the standard value supply section 35. As a result, it is possible to achieve a high speed processing, a saving of power and the like.

An example of the constitution of the interpolation selection section 16 will be described next with reference to Fig. 14.

The interpolation selection section 16 is constituted comprising a buffer 41, a switching section 42, a variance calculation section 43, a comparator 44, and a labeling section 45.

The buffer 41 temporarily stores an image signal of a predetermined region extracted by the extraction section 13.

The switching section 42 switches the output of an image signal stored in the buffer 41 to one of the first interpolation section 17, second interpolation section 18, and third interpolation section 19 in accordance with the label added by the labeling section 45 (described subsequently).

The variance calculation section 43 is comparing means that calculates the variance of the image signal stored in the buffer 41.

The comparator 44 is comparing means that compares the noise amount estimated by the noise estimation section 14, the edge component extracted by the edge extraction section 15, and the variance calculated by the variance calculation section 43.

The labeling section 45 is labeling means that adds labels (as described subsequently) to the image signal stored in the buffer 41 on the basis of the result of the comparison by the comparator 44 and transfers the labels to the switching section 42.

Further, the control section 22 is bidirectionally connected to the switching section 42, variance calculation section 43, comparator 44, and labeling section 45 in order to control these parts.

The function of this interpolation selection section 16 will be described subsequently.

The extraction section 13 extracts signals of a predetermined size in a predetermined position from the image buffer 8 on the basis of the control of the control section 22 and transfers the signals to the buffer 41. In this embodiment, as described earlier, the extraction section 13 extracts five types of blocks which are a rectangular block of 6x6 pixels as shown in Fig. 3, an upper block and lower block of 6x4 pixels as shown in Fig. 4, and a left block and right block of 4x6 pixels as shown in Fig. 5.

The variance calculation section 43 calculates variance according to color signal (in this embodiment, according to RGB color signals of three types) with respect to the image signal of a predetermined region stored in the buffer 41 and transfers the calculated variance to the comparator 44.

The comparator 44 compares the noise amount calculated by the noise estimation section 14, the maximum value among forty-eight edge intensities as shown in equation 1 calculated by the edge extraction section 15, and the variance calculated by the variance calculation section 43. The comparison is performed on the basis of the size of the variance with respect to the noise amount and the size of the maximum value of the edge intensities with respect to the noise amount. That is, the comparator 44 judges that this is an area with an effective edge structure when 'variance>noise amount' and the 'maximum value of the edge intensities > noise amount' is satisfied. On the other hand, the comparator 44 judges the region to be a flat region when at least one of 'variance>noise amount' and the 'maximum value of the edge intensities > noise amount' is not satisfied. In this embodiment, such a comparison is performed sequentially for each of three types of RGB color signals with respect to regions of five types as shown in Figs. 3, 4, and 5. Thus, the result judged by the comparator 44 is transferred to the labeling section 45.

The processing in the abovementioned variance calculation section 43 and the abovementioned processing of the comparator 44 are performed in synchronization with the predetermined region units on the basis of the control of the control section 22.

The labeling section 45 performs labeling to indicate whether a predetermined region is a region with an effective edge structure or a flat region on the basis of the comparison results transferred from the comparator 44. The label adding is performed by means of the addition of numerical values such that a region with an effective edge structure is 1 and a flat region is 0, for example. Because one predetermined region is constituted by RGB color signals of three types, three labels are produced for one predetermined region.

Further, the labeling section 45 adds three labels that are produced for one predetermined region. There are four types of values for which these labels are obtained and these values run from 0, which represents a flat region, to 3, which represents a region for which all three types of color signals have an edge structure.

The switching section 42 performs processing to switch an interpolation processing so as to be performed by means of one of the first interpolation section 17, second interpolation section 18, and third interpolation section 19 on the basis of the label sent by the labeling section 45.

That is, the switching section 42 first selects the second interpolation section 18 when the label of the rectangular block of 6x6 pixels shown in Fig. 3 is 0, that is, when it is judged that all the RGB color signals are flat.

The switching section 42 then selects the first interpolation section 17 when even one block exists for which labeled two or smaller number, with respect to the upper, lower, left and right blocks shown in Figs. 4 and 5, that is, when even one flat region exists among the color signals of four directions and three types.

Finally, the switching section 42 selects the third interpolation section 19 when the all labels are three, that is, all of the color signals of four directions and three types are regions with an edge structure, with respect to the upper, lower, left and right blocks shown in Figs. 4 and 5.

Further, the switching section 42 transfers an image signal of a basic block of $10 \times 10$ pixels from the extraction section 13 to the selected interpolation section and transfers the result of the selection to the control section 22.

An example of the constitution of the first interpolation section 17 will be described next with reference to Fig. 15.

The first interpolation section 17 is constituted comprising a buffer 51, an interpolation section 52, an interpolated value buffer 53, a computation section 54, a G edge extraction section 55, a weighting calculation section 56, and a weighting buffer 57.

The buffer 51 temporarily stores the image signal of a predetermined region transferred from the interpolation selection section 16.

The interpolation section 52 is interpolated signal calculation means that calculates interpolated values (interpolated signals) from the image signal of the predetermined region stored in the buffer 51.

The interpolated value buffer 53 temporarily stores interpolated values calculated by the interpolation section 52.

The computation section 54 is computation means that calculates the missing color component by weighting and adding the interpolated values stored in the interpolated value buffer 53 by using the weightings stored in the weighting buffer 57 and outputs the calculated missing color component to the signal processing section 20 and buffer 51.

The G edge extraction section 55 is edge extraction means. After the interpolation section 52 and the computation section 54 interpolate the missing G component and transfers the interpolated value to the buffer 51, the G edge extraction section 55 reads the G component from the buffer 51 to extract the edge of the G component required to calculate other missing color components.

The weighting calculation section 56 is weighting calculation means that calculates the weighting by using the edge component extracted by the edge extraction section 15 when performing G-component-related interpolation processing, and calculates the weighting by using the edge of the G component extracted by the G edge extraction section 55 when performing R-component or B-component-related interpolation processing.

The weighting buffer 57 temporarily stores the weightings calculated by the weighting calculation section 56.

Further, the control section 22 is bidirectionally connected to the interpolation section 52, computation section 54, G edge extraction section 55, and weighting calculation section 56 in order to control these parts.

The operation of the first interpolation section 17 of this kind will be described next.

The interpolation selection section 16 transfers an image signal of a region of a predetermined size extracted by the extraction section 13 on the basis of the control of the control section 22 and, in this embodiment, transfers an image signal of a 10x10 pixel region to the buffer 51 as mentioned earlier. Here, the target pixels on which interpolation processing is performed by the first interpolation section 17 are 2x2 pixels located at the center of the predetermined region constituted of $10 \times 10$ pixels as mentioned earlier.

The following description is provided for a region with a size of 6x6 pixels (see Fig. 16) that is directly related to interpolation processing. However, an image signal of a region constituted of 10x10 pixels is transferred to the buffer 51 as mentioned earlier.

Fig. 16 shows a region with a size of 6x6 pixels and color signals $S_{ij}$ of the respective pixel positions in the region (S indicates the type of color signal where S=R, G, B, i indicates the pixel coordinate in the X direction where i=2 to 7, and j indicates the pixel coordinate in the Y direction where j=2 to 7).

The first interpolation section 17 performs interpolation processing of missing color signals in the target region constituted of $2 \times 2$ pixels in the center by using an image signal of a region with a size of $6 \times 6$ pixels as shown in Fig. 16.

That is, in the illustrated example, the missing color components $G_{44}$ and $B_{44}$ in position $R_{44}$, the missing color components $R_{54}$, $B_{54}$ in position $G_{54}$, the missing color components $R_{45}$, $B_{45}$ in position $G_{45}$, and the missing color components $R_{55}$, $G_{55}$ in position $B_{55}$ are each calculated.

The interpolation processing is performed with interpolation of the G component first, that is, the missing component $G_{44}$ in position $R_{44}$ and the missing component $G_{55}$ in position $B_{55}$ are interpolated first.

First, the edge intensities in four directions, namely, up, down, left, and right with respect to the $R_{44}$ pixel calculated as indicated by equation 2 are transferred to the weighting calculation section 56 by the edge extraction section 15.

The weighting calculation section 56 calculates the sum, total, of the edge intensities in the four directions as shown in the following equation 8.

<u>Equation 8</u>

$$\text{total}=E_{R\ upper} +E_{R\ lower} +E_{R\ left} +E_{R\ right}$$

Further, the weighting calculation section 56 calculates the normalized weighting coefficients as shown in the following equation 9 by dividing each of the edge intensities by the sum, total.

Equation 9

$$W_{upper} = E_{R\ upper} / total$$

$$W_{lower} = E_{R\ lower} / total$$

$$W_{left} = E_{R\ left} / total$$

$$W_{right} = E_{R\ right} / total$$

The weighting coefficients in the four directions calculated by the weighting calculation section 56 are transferred to and stored in the weighting buffer 57.

Meanwhile, the interpolation section 52 performs interpolation with respect to pixel $R_{44}$ as shown in the following equation 10 on the color difference components in the four directions up, down, left, and right of pixel $R_{44}$.

Equation 10

$$Cr_{upper} = G_{43} - (R_{44} + R_{42}) / 2$$

$$Cr_{lower} = G_{45} - (R_{44} + R_{46}) / 2$$

$$Cr_{left} = G_{34} - (R_{44} + R_{24}) / 2$$

$$Cr_{right} = G_{54} - (R_{44} + R_{64}) / 2$$

The interpolated values in the four directions calculated by the interpolation section 52 are transferred to and stored in the interpolated value buffer 53.

The computation section 54 calculates the missing component $G_{44}$ in the pixel position $R_{44}$ as shown in the following equation 11 by using the weighting coefficients stored in the weighting buffer 57 and the interpolated values stored in the interpolated value buffer 53 on the basis of the control of the control section 22.

Equation 11

$$G_{44} = R_{44} + \Sigma Cr_k \cdot W_k$$

(k=up, down, left, right)

Fig. 17 shows the positions of the pixels used when interpolating the $G_{44}$ component in pixel position $R_{44}$ mentioned earlier.

Thus, the $G_{44}$ component calculated by the computation section 54 is transferred to the signal processing section 20 and transferred to and stored in the buffer 51.

Thereafter, the calculation of the $G_{55}$ component in the pixel position $B_{55}$ is performed in the same way.

That is, the edge intensities in the four directions up, down, left, and right with respect to pixel $B_{55}$ calculated as shown in the abovementioned equation 3 are transferred to the weighting calculation section 56 by the edge extraction section 15.

The weighting calculation section 56 calculates the sum, total, of the edge intensities in the four directions as shown in the following equation 12.

## Equation 12

$$total = E_{B\ upper} + E_{B\ lower} + E_{B\ left} + E_{B\ right}$$

Further, the weighting calculation section 56 calculates the normalized weighting coefficient shown in the following equation 13 by dividing the respective edge intensities by the sum, total.

## Equation 13

$$W_{upper} = E_{B\ upper} / total$$

$$W_{lower} = E_{B\ lower} / total$$

$$W_{left} = E_{B\ left} / total$$

$$W_{right} = E_{B\ right} / total$$

The weighting coefficients in the four directions calculated by the weighting calculation section 56 are transferred to and stored in the weighting buffer 57.

Meanwhile, the interpolation section 52 performs interpolation with respect to pixel $B_{55}$ as shown in the following equation 14 on the color difference components in the four directions up, down, left, and right of pixel $B_{55}$.

## Equation 14

$$Cb_{upper} = G_{54} - (B_{55} + B_{53}) / 2$$

$$Cb_{lower} = G_{56} - (B_{55} + B_{57}) / 2$$

$$Cb_{left} = G_{45} - (B_{55} + B_{35}) / 2$$

$$Cb_{right} = G_{65} - (B_{55} + B_{75}) / 2$$

The interpolated values in the four directions calculated by the interpolation section 52 are transferred to and stored in the interpolated value buffer 53.

The computation section 54 calculates, on the basis of the control of the control section 22, the missing component $G_{55}$ in the pixel position $B_{55}$ as shown in the following equation 15 by using the weighting coefficients stored in the weighting buffer 57 and the interpolated values stored in the interpolated value buffer 53.

## Equation 15

$$G_{55} = B_{55} + \Sigma Cb_k \cdot W_k$$

(k=up, down, left, right)

Fig. 18 shows the positions of the pixels used when interpolating the $G_{55}$ component in pixel position $B_{55}$ mentioned earlier.

Thus, the $G_{55}$ component calculated by the computation section 54 is transferred to the signal processing section 20 and transferred to and stored in the buffer 51.

The interpolation processing of the G signal is performed on all the R pixels and B pixels of a region with a size of 6x6 pixels as shown in Fig. 16. As a result, the G component of all pixel positions is recorded with respect to the region of 6x6 pixels in the buffer 51. This is because the transfer to the buffer 51 and storage therein of an image signal of a region of $10\times10$ pixels as mentioned earlier allows G-component interpolation processing to also be performed on the R and B pixels located in the periphery of the region with a size of 6x6 pixels.

Thereafter, the control section 22 causes the first interpolation section 17 to perform interpolation processing for the missing components $R_{45}$, $B_{45}$ of position $G_{45}$, missing components $R_{54}$, $B_{54}$ of position $G_{54}$, missing component $B_{44}$ of position $R_{44}$, and missing component $R_{55}$ of position $B_{55}$. When the interpolation processing is performed, a G signal calculated as detailed above is also used. G-signal interpolation is performed first for this reason.

First, interpolation processing for missing components $R_{45}$, $B_{45}$ in position $G_{45}$ will be described with reference to Fig. 19.

The equations 16 to 20, which correspond to each of the above equations when $R_{45}$ is calculated, are as follows.

## Equation 16

$$E_{\text{upper left}} = |G_{45} - G_{24}|$$

$$E_{\text{upper middle}} = |G_{45} - G_{44}|$$

$$E_{\text{upper right}} = |G_{45} - G_{64}|$$

$$E_{\text{lower left}} = |G_{45} - G_{26}|$$

$$E_{\text{lower middle}} = |G_{45} - G_{46}|$$

$$E_{\text{lower right}} = |G_{45} - G_{66}|$$

## Equation 17

$$\text{total} = E_{\text{upper left}} + E_{\text{upper middle}} + E_{\text{upper right}} + E_{\text{lower left}}$$

$$+ E_{\text{lower middle}} + E_{\text{lower right}}$$

## Equation 18

$$W_{\text{upper left}} = E_{\text{upper left}} / total$$

$$W_{\text{upper middle}} = E_{\text{upper middle}} / total$$

$$W_{\text{upper right}} = E_{\text{upper right}} / total$$

$$W_{\text{lower left}} = E_{\text{lower left}} / total$$

$$W_{\text{lower middle}} = E_{\text{lower middle}} / total$$

$$W_{\text{lower right}} = E_{\text{lower right}} / total$$

## Equation 19

$$Cr_{\text{upper left}} = G_{24} - R_{24}$$

$$Cr_{\text{upper middle}} = G_{44} - R_{44}$$

$$Cr_{\text{upper right}} = G_{64} - R_{64}$$

$$Cr_{\text{lower left}} = G_{26} - R_{26}$$

$$Cr_{\text{lower middle}} = G_{46} - R_{46}$$

$$Cr_{\text{lower right}} = G_{66} - R_{66}$$

## Equation 20

$$R_{46} = G_{45} - \Sigma Cr_k \cdot W_k$$

(k=upper left, upper middle, upper right, lower left, lower middle, lower right)

Likewise, equations 21 to 25, which correspond to the respective equations above when calculating $B_{45}$ are as follows:

## Equation 21

$$E_{\text{upper left}} = |G_{45} - G_{33}|$$

$$E_{upper\ right} = |G_{45} - G_{53}|$$

$$E_{middle\ left} = |G_{45} - G_{35}|$$

$$E_{middle\ right} = |G_{45} - G_{55}|$$

$$E_{lower\ left} = |G_{45} - G_{37}|$$

$$E_{lower\ right} = |G_{45} - G_{57}|$$

## Equation 22

$$total = E_{upper\ left} + E_{upper\ right} + E_{middle\ left} + E_{middle\ right} + E_{lower\ left} + E_{lower\ right}$$

## Equation 23

$$W_{upper\ left} = E_{upper\ left} / total$$

$$W_{upper\ right} = E_{upper\ right} / total$$

$$W_{middle\ left} = E_{middle\ left} / total$$

$$W_{middle\ right} = E_{middle\ right} / total$$

$$W_{lower\ left} = E_{lower\ left} / total$$

$$W_{lower\ right} = E_{lower\ right} / total$$

## Equation 24

$$Cb_{upper\ left} = G_{33} - B_{33}$$

$$Cb_{upper\ right} = G_{53} - B_{53}$$

$$Cb_{middle\ left} = G_{35} - B_{35}$$

$$Cb_{middle\ right} = G_{55} - B_{55}$$

$$Cb_{lower\ left} = G_{37} - B_{37}$$

$$Cb_{lower\ right} = G_{57} - B_{57}$$

## Equation 25

$$B_{45} = G_{45} - \Sigma Cb_k \cdot W_k$$

(k=upper left, upper right, middle left, middle right, lower left, lower right)

The interpolation processing of missing components $R_{54}$, $B_{54}$ in position $G_{54}$ will be described next with reference to Fig. 20.

Equations 2 6 to 30, which correspond to the equations above when calculating $R_{54}$ are as follows.

## Equation 26

$$E_{upper\ left} = |G_{54} - G_{42}|$$

$$E_{upper\ right} = |G_{54} - G_{62}|$$

$$E_{middle\ left} = |G_{54} - G_{44}|$$

$$E_{middle\ right} = |G_{54} - G_{64}|$$

$$E_{lower\ left} = |G_{54} - G_{46}|$$

$$E_{lower\ right} = |G_{54} - G_{66}|$$

## Equation 27

$$total = E_{upper\ left} + E_{upper\ right} + E_{middle\ left} + E_{middle\ right} + E_{lower\ left} + E_{lower\ right}$$

## Equation 28

$$W_{upper\ left} = E_{upper\ left} / total$$

$$W_{\text{upper right}} = E_{\text{upper right}} / \text{total}$$

$$W_{\text{middle left}} = E_{\text{middle left}} / \text{total}$$

$$W_{\text{middle right}} = E_{\text{middle right}} / \text{total}$$

$$W_{\text{lower left}} = E_{\text{lower left}} / \text{total}$$

$$W_{\text{lower right}} = E_{\text{lower right}} / \text{total}$$

## Equation 29

$$Cr_{\text{upper left}} = G_{42} - R_{42}$$

$$Cr_{\text{upper right}} = G_{62} - R_{62}$$

$$Cr_{\text{middle left}} = G_{44} - R_{44}$$

$$Cr_{\text{middle right}} = G_{64} - R_{64}$$

$$Cr_{\text{lower left}} = G_{46} - R_{46}$$

$$Cr_{\text{lower right}} = G_{66} - R_{66}$$

## Equation 30

$$R_{54} = G_{54} - \Sigma Cr_k \cdot W_k$$

(k=upper left, upper right, middle left, middle right, lower left, lower right)

Likewise, equations 31 to 35, which correspond to the equations above when calculating $B_{54}$, are as follows.

## Equation 31

$$E_{\text{upper left}} = |G_{54} - G_{33}|$$

$$E_{\text{upper middle}} = |G_{54} - G_{53}|$$

$$E_{\text{upper right}} = |G_{54} - G_{73}|$$

$$E_{\text{lower left}} = |G_{54} - G_{35}|$$

$$E_{\text{lower middle}} = |G_{54} - G_{55}|$$

$$E_{\text{lower right}} = |G_{54} - G_{75}|$$

### Equation 32

$$\text{total} = E_{\text{upper left}} + E_{\text{upper middle}} + E_{\text{upper right}} + E_{\text{lower left}} + E_{\text{lower middle}} + E_{\text{lower right}}$$

### Equation 33

$$W_{\text{upper left}} = E_{\text{upper left}} / \text{total}$$

$$W_{\text{upper middle}} = E_{\text{upper middle}} / \text{total}$$

$$W_{\text{upper right}} = E_{\text{upper right}} / \text{total}$$

$$W_{\text{lower left}} = E_{\text{lower left}} / \text{total}$$

$$W_{\text{lower middle}} = E_{\text{lower middle}} / \text{total}$$

$$W_{\text{lower right}} = E_{\text{lower right}} / \text{total}$$

### Equation 34

$$Cb_{\text{upper left}} = G_{33} - B_{33}$$

$$Cb_{\text{upper middle}} = G_{53} - B_{53}$$

$$Cb_{\text{upper right}} = G_{73} - B_{73}$$

$$Cb_{\text{lower left}} = G_{35} - B_{35}$$

$$Cb_{\text{lower middle}} = G_{55} - B_{55}$$

$$Cb_{\text{lower right}} = G_{75} - B_{75}$$

## Equation 35

$$B_{54}=G_{54} -\Sigma Cb_k \cdot W_k$$

(k=upper left, upper middle, upper right, lower left, lower middle, lower right)

Thus, when interpolating missing components $R_{45}$, $B_{45}$ of position $G_{45}$ and missing components $R_{54}$, $B_{54}$ of position $G_{54}$, weighting coefficients of six directions and the interpolated values (color difference components) are employed.

Thereafter, Fig. 21 shows an aspect of the peripheral pixels used when interpolating $B_{44}$ of position $R_{44}$.

Equations 36 to 40, which correspond to the equations above when calculating $B_{44}$, are as follows.

## Equation 36

$$E_{upper\ left} =|G_{44} -G_{33}|$$

$$E_{upper\ right} =|G_{44} -G_{53}|$$

$$E_{lower\ left} =|G_{44} -G_{35}|$$

$$E_{lower\ right} =|G_{44} -G_{55}|$$

## Equation 37

$$total=E_{upper\ left} +E_{upper\ right} + E_{lower\ left} + E_{lower\ right}$$

## Equation 38

$$W_{upper\ left} =E_{upper\ left} /total$$

$$W_{upper\ right} =E_{upper\ right} /total$$

$$W_{lower\ left} =E_{lower\ left} /total$$

$$W_{lower\ right} =E_{lower\ right} /total$$

## Equation 39

$$Cb_{upper\ left} = G_{33} - B_{33}$$

$$Cb_{upper\ right} = G_{53} - B_{53}$$

$$Cb_{lower\ left} = G_{35} - B_{35}$$

$$Cb_{lower\ right} = G_{55} - B_{55}$$

## Equation 40

$$B_{44} = G_{44} - \Sigma Cb_k \cdot W_k$$

(k=upper left, upper right, lower left, lower right)

Next, Fig. 22 shows an aspect of the peripheral pixels used when interpolating $R_{55}$ of position $B_{55}$.

Equations 41 to 45, which correspond to the equations above when calculating $R_{55}$, are as follows.

## Equation 41

$$E_{upper\ left} = |G_{55} - G_{44}|$$

$$E_{upper\ right} = |G_{55} - G_{64}|$$

$$E_{lower\ left} = |G_{55} - G_{46}|$$

$$E_{lower\ right} = |G_{55} - G_{66}|$$

## Equation 42

$$total = E_{upper\ left} + E_{upper\ right} + E_{lower\ left} + E_{lower\ right}$$

## Equation 43

$$W_{upper\ left} = E_{upper\ left} / total$$

$$W_{upper\ right} = E_{upper\ right} / total$$

$$W_{lower\ left} = E_{lower\ left} / total$$

$$W_{lower\ right} = E_{lower\ right} / total$$

## Equation 44

$$Cr_{upper\ left} = G_{44} - R_{44}$$

$$Cr_{upper\ right} = G_{64} - R_{64}$$

$$Cr_{lower\ left} = G_{46} - R_{46}$$

$$Cr_{lower\ right} = G_{66} - R_{66}$$

## Equation 45

$$R_{55} = G_{55} - \Sigma Cr_k \cdot W_k$$

(k=upper left, upper right, lower left, lower right)

The edge intensities used in the processing shown in Figs. 19 to 22 are calculated by the G edge extraction section 55 and transferred to the weighting calculation section 56.

After the interpolation processing above has ended, each of the calculated signals is transferred to the signal processing section 20 and processed.

An example of the constitution of the second interpolation section 18 will be described next with reference to Fig. 23.

The second interpolation section 18 is constituted comprising a buffer 61, a correlation calculation section 62, and a computation section 63.

The buffer 61 temporarily stores an image signal of a predetermined region transferred form the interpolation selection section 16.

The correlation calculation section 62 is correlation calculation means that calculates correlations between color signals from the image signal stored in the buffer 61.

The computation section 63 is computation means that, on the basis of the correlations calculated by the correlation calculation section 62, reads the image signal from the buffer 61, calculates the missing color components, and outputs the missing color components to the signal processing section 20.

The control section 22 is bidirectionally connected to the correlation calculation section 62 and computation section 63 in order to control these parts.

The operation of a second interpolation section 18 of this kind will be described next.

The interpolation selection section 16 transfers, to the buffer 61, an image signal of a predetermined size, a basic block of 10x10 pixels as shown in Fig. 2 for this embodiment, on the basis of the control of the control section 22.

The correlation calculation section 62 regresses the correlation as a linear equation from the source signal of a single-panel state stored in the buffer 61 on the basis of the control of the control section 22.

That is, supposing that three RGB signals are S(S=R,G,B), the average of the S signals of the basic block is AV_S, and the variance of the S signals of the basic block is Var_S, if a linear color correlation between the two color signals S and S' (where S≠S') is established, the linear equation is regressed by means of the following equation 46.

## Equation 46

$$S' = (Var\_S'/Var\_S) \times (S - AV\_S) + AV\_S'$$

The linear equation represented by equation 46 is found between R and G signals, G and B signals, and R and B signals respectively and the results found are transferred to the computation section 63.

The computation section 63 calculates, on the basis of the linear equation represented by equation 46 and the source signal stored in the buffer 61, the missing color signals for each of 2x2 pixels in the center of the basic block of 10x10 pixels of the buffer 61, that is, for each of the pixels $R_{44}$, $G_{54}$, $G_{45}$, and $B_{55}$.

More specifically, with respect to the position of pixel $R_{44}$, a $G_{44}$ component is calculated by using the linear equation of equation 46 established between R and G signals and the component $B_{44}$ is calculated by using the linear equation of equation 4 6 established between Rand B signals. Such processing is likewise performed on the other pixels $G_{54}$, $G_{45}$, and $B_{55}$.

The missing color signals calculated by the computation section 63 are transferred together with the source signal to the signal processing section 20.

An example of the constitution of the third interpolation section 19 will be described next with reference to Fig. 24.

The third interpolation section 19 is constituted comprising a buffer 71, an RB linear interpolation section 72, and a G cubic interpolation section 73.

The buffer 71 temporarily stores an image signal of a predetermined region transferred from the interpolation selection section 16.

The RB linear interpolation section 72 is computation means that calculates missing R and B signals by means of publicly known linear interpolation processing with respect to a target region within an image signal of a predetermined region stored in the buffer 71 and outputs the missing R and B signals to the signal processing section 20.

The G cubic interpolation section 73 is computation means that calculates missing G signals by means of publicly known cubic interpolation processing with respect to a target region within an image signal of a predetermined region stored in the buffer 71 and outputs the missing G signals to the signal processing section 20.

The control section 22 is bidirectionally connected to the RB linear interpolation section 72 and G cubic interpolation section 73 in order to control these parts.

The operation of a third interpolation section 19 of this kind will be described next.

The interpolation selection section 16 sequentially transfers, to the buffer 71, a predetermined size of the image signal, the basic block of $10 \times 10$ pixels as shown in Fig. 2 for this embodiment, on the basis of the control of the control section 22.

The RB linear interpolation section 72 calculates missing R and B signals for $2 \times 2$ pixels (target region) in the center of the basic block of $10 \times 10$ pixels stored in the buffer 71. That is, in the case of the pixel constitution shown in Fig. 2, the signals $R_{54}$ and $B_{54}$, and $R_{45}$ and $B_{45}$ are missing for pixels $G_{54}$ and $G_{45}$ respectively of the target region. Therefore, the R and B signals are calculated by publicly known linear interpolation processing. In addition, because a B signal is missing for pixel $R_{44}$ of the target region and an R signal is missing for pixel $B_{55}$, signals $B_{44}$ and $R_{55}$ are calculated by similarly performing publicly known linear interpolation processing. The RB signal calculated in this manner is output to the signal processing section 20.

On the other hand, the G cubic interpolation section 73 calculates a missing G signal with respect to the target region of the basic block stored in the buffer 71. That is, missing $G_{44}$ and $G_{55}$ signals are calculated by means of publicly known cubic interpolation processing with respect to the pixels $R_{44}$ and $B_{55}$ and the calculated G signals are output to the signal processing section 20.

In the above description, it is assumed that the processing is performed by hardware. However, the present invention is not necessarily limited to such a configuration. For example, it would also be possible to output the image signals from the CCD4 are taken as raw data in an unprocessed state, and information from the control section 22 such as the temperature of the CCD4 and the gain of the amplifier 6 at the time of shooting and so on are added to the raw data as header information. After that, processing can be performed by means of an image processing program which is special software on an external computer or the like.

The overall interpolation processing by the image processing program will be described with reference to Fig. 25.

When the processing is started, first the source signal constituting Raw data, and header information are read (step S1) and the source signal is extracted with the basic block serving as a unit and, in this embodiment, with the 10x10 pixels shown in Fig. 2 serving as a unit (step S2).

A noise amount estimation is then performed for regions of five types, namely, the rectangular block, upper block, lower block, left block, and right block shown in Figs. 3, 4 and 5 of the extracted basic block (step S3). The noise amount estimated in step S3 is transferred to the processing of steps S5 and S7 described subsequently.

Meanwhile, the edge intensities are calculated for the basic block extracted in step S2 (step S4). More precisely, the edge intensities calculated as shown in abovementioned equation 1 are transferred to the processing of steps S5 and S7 (described subsequently) and the edge intensities calculated as shown in the abovementioned equation 2 and 3 are transferred to the processing of step S8 (described subsequently).

The noise amount of the rectangular block calculated in step S3 above, the maximum amount among a plurality of edge intensities calculated in step S4 above, and the variance of the respective color signals are compared (step S5).

In step S5, when 'variance>noise amount' and 'the maximum value of the edge intensities > noise amount' is true for all the color signals, it is assumed that the region is a region with an effective edge structure and the processing branches to step S7 (described subsequently) and, in other cases, it is assumed that the region is a flat section and the processing branches to the second interpolation processing of step S6 (described subsequently).

When the processing branches from step S5, missing color component interpolation is performed by using color correlation (step S6) . The interpolation result of step S6 is transferred to step S10 (described subsequently).

Further, when the processing branches from step S5, the respective noise amounts of the upper block, lower block, left block, and right block calculated in step S3, the maximum value among the plurality of edge intensities calculated in step S4, and the variance of the respective color signals are compared (step S7).

In step S7, when even one flat section exists among all the color signals of all of the upper block, lower block, left block, and right block, the processing branches to the first interpolation processing of step 8 (describedsubsequently) and, in other cases, the processing branches to the third interpolation processing of step S9 (described subsequently) .

When the processing branches from step S7, missing color component interpolation based on edge direction is performed (step S8). The processing result of step S8 is transferred to step S10 (described subsequently).

Further, when the processing branches from step S7, the missing R signal and B signal are calculated by means of publicly known linear interpolation processing and the missing G signal is calculated by means of publicly known cubic interpolation processing (step S9). The processing result of step S9 is transferred to step S10 (described subsequently).

Once the second interpolation processing of step S6, the first interpolation processing of step S8, or the third interpolation processing of step S9 has been performed, the interpolated signal constituting the processing result is output (step S10).

It is then judged whether the block region extraction processing with respect to all the source signals is complete (step S11) and, in cases where the processing has not been completed, the processing returns to the abovementioned step S2, and the abovementioned processing is repeated for the next block region.

Further, when it is judged that the processing of the block regions with respect to all the source signals is complete in step S11, publicly known emphasis processing and compression processing are performed (step S12) and the processed signals are output (step S13), whereupon the processing is terminated.

The noise estimation processing of step S3 above will be described next with reference to Fig. 26.

When the processing is started, the rectangular block of 6x6 pixels shown in Fig. 3, the upper and lower blocks of 6x4 pixels shown in Fig. 4, and the left and right blocks of 4x6 pixels shown in Fig. 5 will each be extracted (step S21).

The source signals of each of the extracted blocks are separated into color signals and, in this embodiment, into RGB color signals of three types (step S22).

The average value of each of the separated color signals will be calculated as the signal level (step S23).

Further, parameters such as the temperature and the gain at the time of shooting and so on are set on the basis of the header information (step S24).

In addition, the parameters of the functions required for noise amount calculation such as the three functions $a(T,G)$, $b(T,G)$, and $c(T,G)$ shown in Figs. 11 to 13, for example, are read (step S25).

Thereafter, the noise amount is calculated on the basis of equation 6 or 7 by using the signal level of step S23, the various parameters of step S24, and the functions of step S25 (step S26).

It is then judged whether the extraction of all the blocks in a local region is complete (step S27) and, when the extraction is not complete, the processing returns to step S21 above and the above processing is repeated. When the extraction is complete, the noise estimation processing is terminated.

The first interpolation processing of step S8 will be described next with reference to Fig. 27.

The source signals in the blocks are separated into color signals and, in this embodiment, into RGB color signals of three types (step S31).

Weighting coefficients are then calculated by means of equation 9 or 13 on the basis of the edge intensities calculated by means of step S4 (step S32).

Color difference components are also calculated by means of equation 10 or 14 (step S33).

G-signal interpolation is then performed by means of equation 11 or 15 (step S34).

Edge intensities according to direction are calculated by means of equation 16 or 21, or equation 26 or 31 (step S35) .

Weighting coefficients are then calculated by means of equation 18 or 23 or equation 28 or 33 on the basis of the edge intensities calculated in step S35 (step S36).

Thereafter, color difference components are calculated by means of equation 19 or 24 or equation 29 or 34 (step S37).

Interpolation of R and B signals is then performed by means of equation 20 or 25 or equation 30 or 35 (step S38), and the first interpolation processing is terminated.

Furthermore, the second interpolation processing of step S6 above will be described with reference to Fig. 28.

The source signals in the blocks are separated into color signals and, in this embodiment, into RGB color signals of three types (step S41).

Next, the correlation coefficient constituting the coefficient of the equation of the correlation function of equation 46, that shows the correlation between the color signals, is calculated (step S42). The calculation of the correlation coefficient is performed between the color signals R and G, G and B, and R and B.

The missing color signals are then calculated on the basis of the correlation coefficients calculated by means of step S42 (step S43) and the second interpolation processing is completed.

Although the first interpolation processing, second interpolation processing, and third interpolation processing are compulsorily combined in order to perform the processing above, the processing need not be limited to such a constitution.

For example, the constitution can also be such that, in cases where an image quality mode of a high compression ratio that does not require highly accurate interpolation processing is selected via the external I/F section 23 and in cases where a photographic mode such as moving image photography requiring high-speed processing is selected, and so forth, only the third interpolation processing that performs interpolation of missing color signals by means of linear interpolation processing or cubic interpolation processing is fixedly selected. In such cases, the control section 22 may be set so as to transfer the image signal of the region extracted by the extraction section 13 to the third interpolation section 19 by stopping the operation of the noise estimation section 14, edge extraction section 15, and interpolation selection section 16 and so forth. Such control may be performed manually via the external I/F section 23 or the constitution may also be such that the control section 22 automatically performs control in accordance with the photographic mode. Such a constitution allows the processing time to be shortened or the power consumption to be reduced.

Furthermore, although the temperature of the CCD4 constituting an image pickup element is substituted with an average value supplied by the standard value supply section 35 in the above description, processing is not limited to such an arrangement. For example, a temperature sensor or the like can also be installed in the vicinity of the CCD4 and the actual measured values output by the temperature sensor may be used. If such a constitution is adopted, the accuracy of the noise amount estimation can be increased.

In addition, although the rectangular block, upper block, lower block, left block, and right block shown in Figs. 3, 4, and 5 are used by the noise estimation section 14 in the above description, the noise estimation section 14 is not limited to such blocks. For example, noise can be estimated by using blocks of arbitrary shapes such as horizontal blocks and vertical blocks as shown in Fig. 6 or $\pm45$ degree blocks shown in Fig. 7.

Further, although the interpolation selection section 16 performs a comparison of the noise amount and the calculated variance of color signals in a predetermined region, the comparison is not limited to such a method. For example, simplification that regards the region as a flat region when the noise amount in the predetermined region is equal to or less than a predetermined threshold value can also be implemented. As a result, the variance calculation section 43 in the interpolation selection section 16 shown in Fig. 14 canbe omitted, a shortening of the processing time can be achieved, and a reduction in the power consumption can be implemented.

According to the first embodiment, because the first interpolation processing based on the edge direction, the second interpolation processing based on color correlation, and third interpolation processing based on the linear interpolation or cubic interpolation are adaptively switched on the basis of the noise amount in the neighborhood of the target pixel, the optimum interpolation processing that considers the effects of noise can be selected to make it possible to obtain a high quality image signal.

Furthermore, various types of parameters such as the signal level and the gain and the like are determined dynamically for each shooting operation, and the amount of noise is calculated on thebasis of these parameters, the noise amount canbe estimated highly accurately by dynamically adapting to different conditions for each photograph.

In addition, because standard values can also be used in cases where parameters for estimating the noise amount have not been obtained, a noise amount estimation can be performed in a stable manner.

Further, by using a function in the calculation of the noise amount, the amount of memory required can be reduced and costs can be reduced. In addition, by intentionally omitting some of the parameter calculations, even lower costs and power savings can be achieved.

In addition, weighting coefficients that are inversely proportional to the edge intensities are found on the basis of the edge intensities of a plurality of directions and multiplied by interpolated signals of a plurality of directions before performing interpolation processing to produce an interpolated signal of the target pixel from the sum total value of the multiplied interpolated signals and, therefore, highly accurate interpolation processing can be performed for regions with a structure in a specified direction.

Furthermore, because a correlation between color signals in a predetermined region is determined as a linear equation and interpolation processing that finds an interpolated signal from the linear equation is performed, highly accurate interpolation processing can be performed in regions consisting of a single color phase.

In addition, because interpolation processing is performed by performing cubic interpolation on the G signal close to the brightness signal and linear interpolation on the other R and B signals, an overall reduction in image quality can be suppressed by matching the visual characteristics while increasing the speed of processing.

Further, because it is judged whether a predetermined region is suited to interpolation processing (effective or ineffective) on the basis of the statistic and noise amount of the predetermined region, the capability of separating regions with an effective edge structure from flat regions increases and the optimum interpolation method that is not susceptible to the effects of noise can be selected.

Further, because it is judged whether a predetermined region is suited to interpolation processing (effective or ineffective) on the basis of the noise amount and threshold value of the predetermined region, the capability of separating regions with an effective edge structure from flat regions increases and the optimum interpolation method that is not susceptible to the effects of noise can be selected. Furthermore, when a comparison with a threshold value is performed, there is the advantage that the processing speed can be raised.

In addition, because the selection of the interpolation processing can be desirably performed manually, it is possible to follow the aims of the user relating to interpolation processing with a greater degree of freedom and the processing time can be shortened and the power consumption can be reduced.

Further, image quality information such as the compression ratio and image size, photographic mode information such as the character image photography and moving image photography, and information for switching the interpolation processing of the user are acquired, and a judgment for switching the interpolation processing is performed on the basis of these information. Hence, in cases where highly accurate interpolation is not required because high compression is being performed and cases where high-speed processing is prioritized as in the case of moving image photography, and so forth, for example, switching of the interpolation processing is omitted and the processing speed and responsiveness can be improved.

Second Embodiment

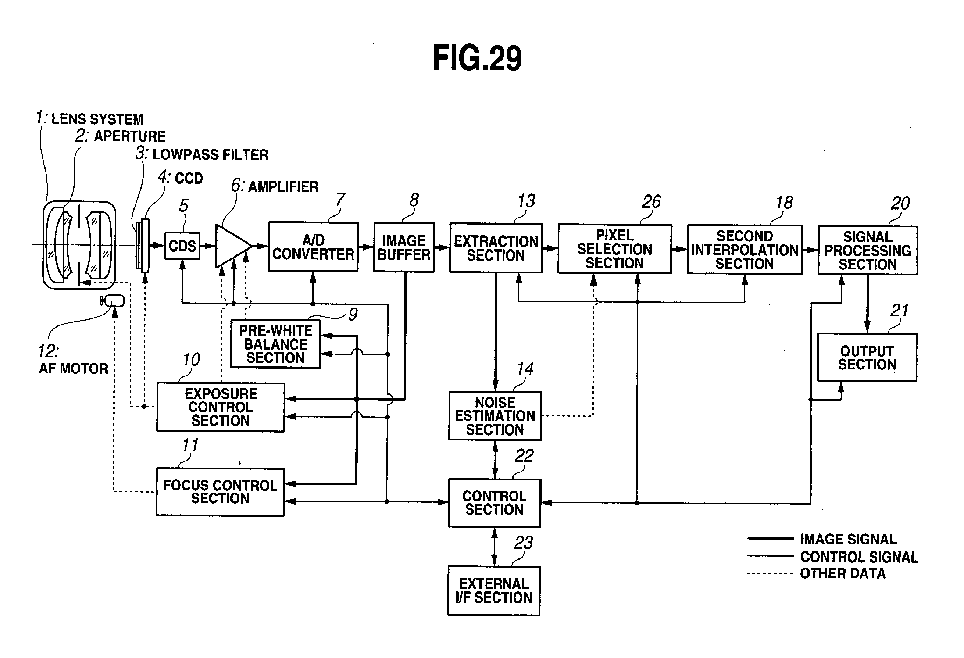

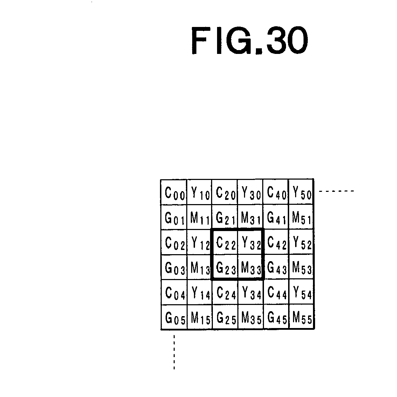

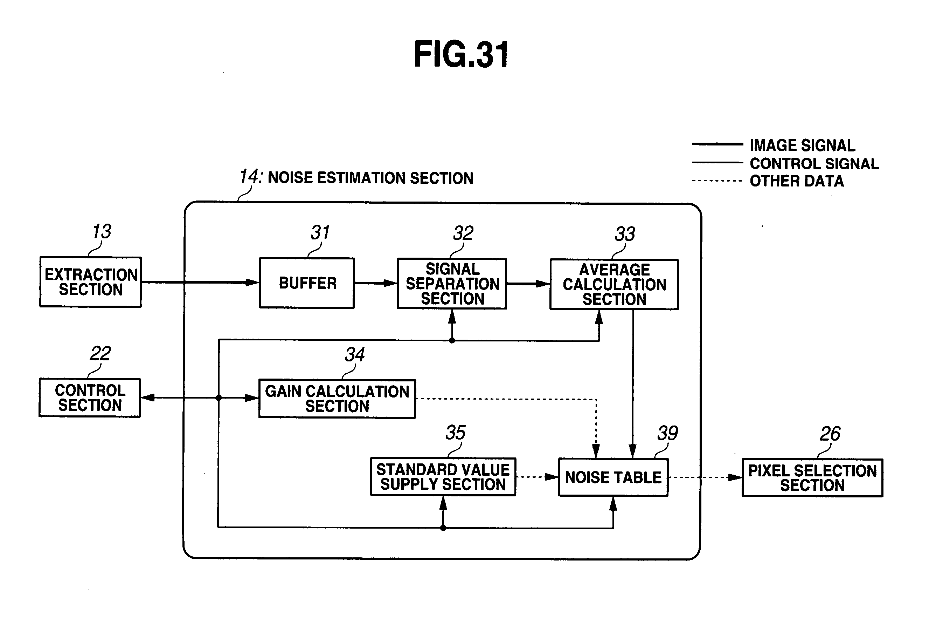

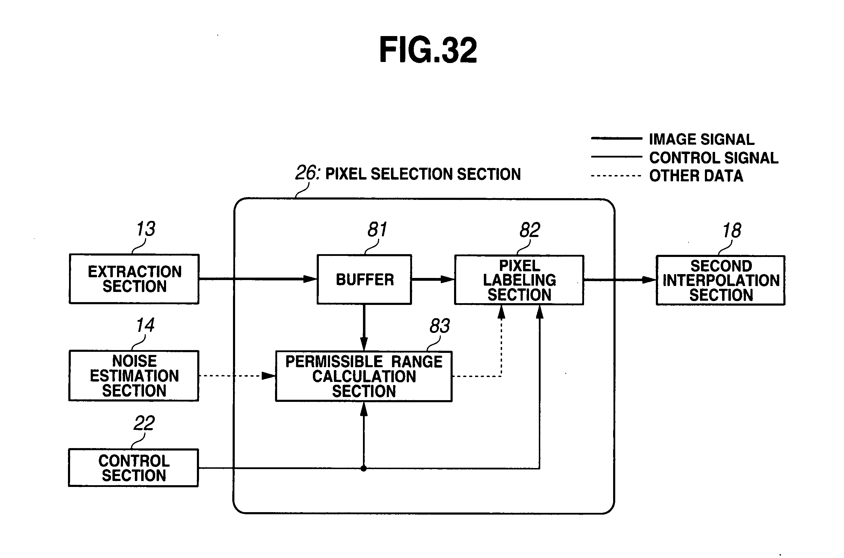

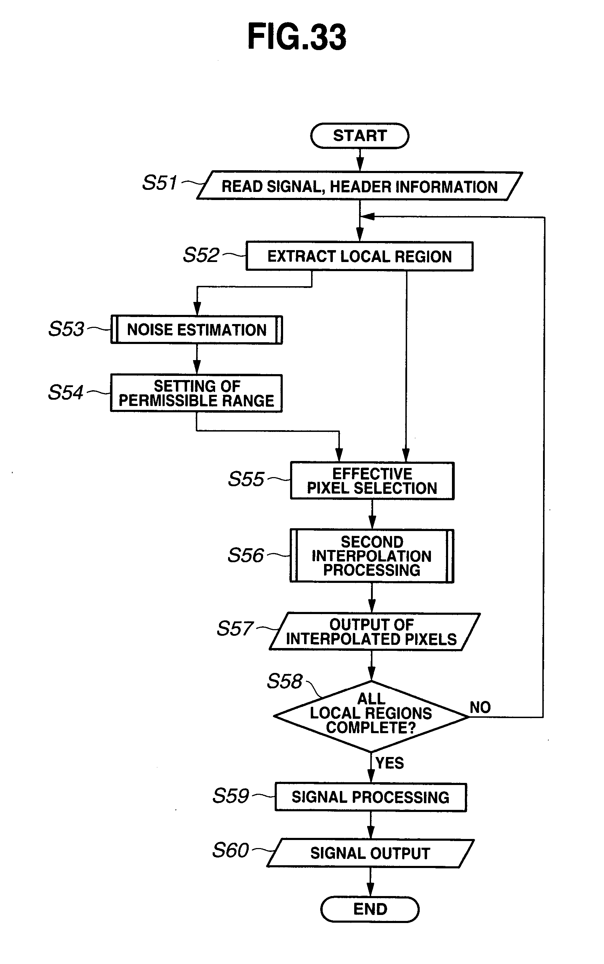

Figs. 29 to 33 illustrate the second embodiment of the present invention. Fig. 29 is a block diagram showing the constitution of the image pickup system. Fig. 30 shows the disposition of color filters of a basic block of 6x6 pixels extracted by the extraction section. Fig. 31 is a block diagram of the constitution of a noise estimation section. Fig. 32 is a block diagram of the constitution of a pixel selection section. Fig. 33 is a flow chart of processing by the image processing program.

In the second embodiment, the same numerals are assigned to the parts that are the same as in the abovementioned first embodiment and a description of such parts is omitted. Only the differences are mainly described.

The constitution of the image pickup system of the second embodiment is basically substantially the same as the constitution shown in Fig. 1 of the first embodiment above. The edge extraction section 15, interpolation selection section 16, first interpolation section 17, and third interpolation section 19 have been removed from the constitution of Fig. 1 and a pixel selection section 26 constituting interpolation pixel selection means constituting pixel selection means has been added.

That is, the image signal extracted by the extraction section 13 is transferred to the noise estimation section 14 and also transferred to the pixel selection section 26. Further, the noise amount estimated by the noise estimation section 14 is transferred to the pixel selection section 26 and the results of the processing by the pixel selection section 26 are transferred to the second interpolation section 18.

The control section 22 is also bidirectionally connected to the pixel selection section 26 in order to control the part.

Further, in the second embodiment, the color filters disposed in front of the CCD4 are assumed to be C (cyan), M (magenta), Y (yellow) and G (green) complementary color filters.

Mainlyparts that differ from those of the first embodiment will be described in keeping with the flow of signals in the operation of the image pickup system shown in Fig. 29.

The extraction section 13 extracts the image signal in the image buffer 8 in predetermined region units on the basis of the control of the control section 22 and transfers the image signal to the noise estimation section 14 and pixel selection section 26 respectively. It is assumed in this embodiment that the predetermined region extracted by the extraction section 13 is a basic block of $6\times6$ pixels shown in Fig. 30. Further, the target pixels constituting the target of the interpolation processing are assumed to be four pixels ($C_{22}$, $Y_{32}$, $G_{23}$, $M_{33}$) formed by $2\times2$ pixels located at the center of the basic block shown in Fig. 30. Therefore, the extraction of a predetermined region by the extraction section 13 is performed while moving the basic block of $6\times6$ pixels two pixels at a time in a horizontal direction or vertical direction (that is, while overlapping the basic block).

The noise estimation section 14 estimates, for each of the CMYG color signals of this embodiment, the noise amount with respect to regions transferred by the extraction section 13 on the basis of the control of the control section 22 for each color signal and transfers the estimated results to the pixel selection section 26.

On the basis of the control of the control section 22, the pixel selection section 26 uses the noise amount transferred from the noise estimation section 14 and sets the permissible range for each color signal. Further, the pixel selection section 26 compares in pixel units the color signals in a predetermined region with the permissible range, adds a label indicating whether the color signals are within the permissible range or outside the permissible range, and transfers the result to the second interpolation section 18.

The second interpolation section 18 uses pixels judged by the pixel selection section 26 to be within the permissible range and, as well as the abovementioned first embodiment, performs interpolation processing based on color correlation and transfers interpolated signals to the signal processing section 20. Further, in this embodiment, because the color signals are C, M, Y, and G, the second interpolation section 18 finds a linear equation as shown in the abovementioned equation 46 between color signals C and M, C and Y, C and G, M and Y, M and G, and Y and G.

Further, the processing of the extraction section 13, noise estimation section 14, pixel selection section 26, and second interpolation section 18 are performed in synchronization with the predetermined region units on the basis of the control of the control section 22.

The subsequent processing of the signal processing section 20 and output section 21 and so forth is the same as in the abovementioned first embodiment.

An example of the constitution of the noise estimation section 14 of this embodiment will be described next with reference to Fig. 31.

The noise estimation section 14 is constituted comprising the buffer 31, signal separation section 32, average calculation section 33, gain calculation section 34, standard value supply section 35 and a noise table 39.

That is, the noise estimation section 14 shown in Fig. 31 is created by removing the coefficient calculation section 36, parameter ROM 37, and function calculation section 38 from the noise estimation section 14 shown in Fig. 8 of the first embodiment above and by adding the noise table 39.

The noise table 39 is look-up table means constituting noise amount calculation means. To the noise table 39, the average value calculated by the average calculation section 33 is transferred, the gain calculated by the gain calculation section 34 is also transferred, and further the temperature of CCD5 constituting an image pickup element and so on are transferred from the standard value supply section 35 as standard values. Further, the noise table 39 outputs the result obtained by referencing the table to the pixel selection section 26.

Further, the control section 22 is also bidirectionally connected to the noise table 39 in order to control the part.

The operation of the noise estimation section 14 will be described next.

The extraction section 13 extracts signals of a predetermined size in a predetermined position from the image buffer 8 on the basis of the control of the control section 22 and transfers the signals to the buffer 31. In this embodiment, noise amount estimation is performed with respect to a 6x6 pixel region as shown in Fig. 30.

The signal separation section 32 separates signals in a predetermined region stored in the buffer 31 into respective color signals (CMYG color signals of four types in this embodiment) on the basis of the control of the control section 22 and transfers the separated color signals to the average calculation section 33.

The average calculation section 33 reads color signals from the signal separation section 32 to calculate the average value on the basis of the control of the control section 22 and transfers the average value to the noise table 39 as the signal level of a predetermined region.

The gain calculation section 34 calculates the amplification amount (gain) of the amplifier 6 on the basis of information related to the exposure condition and white balance coefficient transferred from the control section 22 and transfers the amplification amount to the noise table 39.

Further, the standard value supply section 35 transfers information relating to the average temperature of the CCD4 constituting the image pickup element to the noise table 39.

The noise table 39 is constructed on the basis of equation 6 or 7 in the abovementioned first embodiment by a lookup table that records the relationship between the temperature, signal level, gain, and amount of noise. The noise table 39 acquires a corresponding noise amount by referencing the look-up table on the basis of the acquired respective items of information on the temperature, signal level, and gain, and transfers the acquired noise amount to the pixel selection section 26.

Further, the standard value supply section 35 is not limited to the temperature of the CCD4 as well as the abovementioned first embodiment and comprises a function to supply standard values also even in cases where any of the other parameters are omitted.

An example of the constitution of the pixel selection section 26 will be described next with reference to Fig. 32.

The pixel selection section 26 is constituted comprising a buffer 81, a pixel labeling section 82, and a permissible range calculation section 83.

The buffer 81 temporarily stores an image signal of a predetermined region extracted by the extraction section 13.

The pixel labeling section 82 is labeling means that reads the image signal stored in the buffer 81 in pixel units, compares the image signal with the output of the permissible range calculation section 83 (described subsequently), labels the image signal in accordance with the comparison results, and transfers the results to the second interpolation section 18.

The permissible range calculation section 83 is permissible range setting means that sets the permissible range of the image signal stored in the buffer 81 on the basis of the noise amount transferred from the noise estimation section 14.

Further, the control section 22 is bidirectionally connected to the pixel labeling section 82 and permissible range calculation section 83 in order to control these parts.

The operation of the pixel selection section 26 will be described next.

The extraction section 13 extracts signals of a predetermined size in a predetermined position from the image buffer 8 on the basis of the control of the control section 22 and transfers the signals to the buffer 81. In this embodiment, the selection of pixels is performed with respect to a region of 6x6 pixels as shown in Fig. 30.

The permissible range calculation section 83 calculates an average value AV_5 (S=C, M, Y, G) of the respective color signals with respect to the signals of a predetermined region stored in the buffer 81 on the basis of the control of the control section 22. Furthermore, the permissible range calculation section 83 sets the upper limit Aup_S and lower limit Alow_S of the permissible range as shown in the following equation 47 on the basis of the noise amount N_S acquired from the noise estimation section 14.

<u>Equation 47</u>

$$Aup\_S = AV\_S + N\_S/2$$

$$Alow\_S = AV\_S - N\_S/2$$

Such a permissible range, Aup_S, Alow_S is set for each of the color signals and transferred to the pixel labeling section 82.

The pixel labeling section 82 judges a pixel equal to or less than the upper limit Aup_S and equal to or more than the lower limit Alow_S to be an effective pixel belonging to a flat region with respect to each of the color signals transferred from the buffer 81, on the basis of the control of the control section 22 and transfers the pixel as is to the second interpolation section 18.

On the other hand, the pixel labeling section 82 judges a pixel whose signal is greater than the upper limit Aup_S or a pixel whose signal is smaller than the lower limit Alow_S as an ineffective pixel that belongs to a region having an edge or other structure and adds a specified label.

The label adds a minus to the original signal value and, if required, the signal value can be restored to the original signal value.

The second interpolation section 18 uses effective pixels that are transferred from the pixel selection section 26 to perform color-correlation interpolation processing as well as the abovementioned first embodiment and transfers the interpolated signals to the signal processing section 20.

Further, when it is judged by the pixel selection section 26 that all the pixels in the predetermined region are ineffective pixels, interpolation processing is performed conveniently with all the pixels in the predetermined region being taken to be effective pixels.

Furthermore, in the above description, it is assumed that the processing is performed by hardware. However, the present invention is not necessarily limited to such a configuration. For example, it would also be possible to output the image signals from the CCD4 are taken as raw data in an unprocessed state, and information from the control section 22 such as the temperature of the CCD4 and the gain of the amplifier 6 at the time of shooting and so on are added to the raw data as header information. After that, processing can be performed by means of an image processing program which is special software on an external computer or the like.

The interpolation processing by the image processing program will now be described with reference to Fig. 33.

When the processing is started, first the source signal constituting Raw data, and header information are read (step S51) and the source signal is extracted with the basic block serving as a unit and, in this embodiment, with the 6×6 pixels shown in Fig. 30 serving as a unit (step S52).

The noise amount of the extracted basic block is then estimated (step S53).

Subsequently, the upper limit Aup_S and lower limit Alow_S of the permissible range as shown in the abovementioned equation 47 are set by using the estimated noise amount (step S54).

Each of the color signals in the predetermined region extracted in step S52 is selected as being that of an effective pixel or an ineffective pixel on the basis of the permissible range set in step S54 (step S55).

Color-correlation-based interpolation processing is performed by using signals of pixels selected as effective pixels in step S55 (step S56) and the interpolated signals are output (step S57).

Here, it is judged whether the processing of all the local regions extracted from all the signals has ended (step S58) and, in cases where the processing has not been completed, the processing returns to the abovementioned step S52, and the abovementioned processing is repeated for the next local region.

On the other hand, when it is judged that the processing of all the local regions has ended, the publicly known emphasis processing and compression processing and so forth are performed (step S59) and the processed signals are output (step S60), whereupon the processing is terminated.

Further, although a basic block of 6×6 pixels is used as the predetermined region above, the predetermined region is not limited thereto. For example, in cases where an image quality mode of a high compression ratio that does not require highly accurate interpolation processing is selected via the external I/F section 23 and in cases where a photographic mode such as moving image photography requiring high-speed processing is selected, and so forth, processing can also be performed in a smaller region such as 4x4 pixels. The constitution can also be such that such control is performed manually via the external I/F section 23 or the control section 22 performs control automatically in accordance with the photographic mode. Such a constitution allows the processing time to be shortened or power consumption to be reduced.

Furthermore, although a complementary color single CCD is described above by way of example, the present invention is not limited to a complementary color single CCD. For example, the present invention can also be similarly applied to a single-panel image pickup element comprising the primary color Bayer-type color filters described in the first embodiment and can be similarly applied to a two-panel image pickup system or even three CCD image pickup system in which performs pixel shifting.

In addition, although second interpolation processing based on color correlation is used as the interpolation processing, the interpolation processing is not limited to such a constitution. For example, edge-direction-based interpolation processing or the like as well as the abovementioned first interpolation processing described in the first embodiment can also be used and can be combined with arbitrary interpolation processing having characteristics that differ from those of the second interpolation processing.

The second embodiment affords effects that are substantially the same as in the abovementioned first embodiment and, because the pixels are selected based on the estimated noise amount by estimating the noise amount from the source signal in the neighborhood of the target pixel, the capability of separating pixels that belong to an effective edge structure from pixels belonging to a flat region improves. As a result, a high quality image signal can be obtained by performing optimum interpolation processing that is not affected by noise.

Furthermore, various types of parameters such as the signal level and the gain and the like are determined dynamically for each shooting operation, and the amount of noise is calculated on the basis of these parameters, the noise amount can be estimated highly accurately by dynamically adapting to different conditions for each photograph. Here, processing can be performed at high speed by using a table to determine the noise amount.

In addition, because standard values can also be used in cases where parameters for estimating the noise amount have not been obtained, a noise amount estimation can be performed in a stable manner.

Further, by intentionally omitting some of the parameter calculations, even lower costs and power savings can be achieved.

Furthermore, because a correlation between color signals in a predetermined region is determined as a linear equation and interpolation processing that finds an interpolated signal from the linear equation is performed, highly accurate interpolation processing can be performed in regions consisting of a single hue.

Further, because it is judged whether a pixel is suited to interpolation processing (effective or ineffective) from the permissible range based on the noise amount of the predetermined region and the average value of the color signal, the capability of separating the pixels that belong to an effective edge structure from pixels belonging to a flat region improves, whereby optimum interpolation processing from which the effects of noise are removed can be performed.

In addition, because the selection of the pixels used in the interpolation processing can be desirably performed manually, it is possible to follow the aims of the user relating to interpolation processing with a greater degree of freedom and the processing time can be shortened and the power consumption can be reduced.

Third embodiment

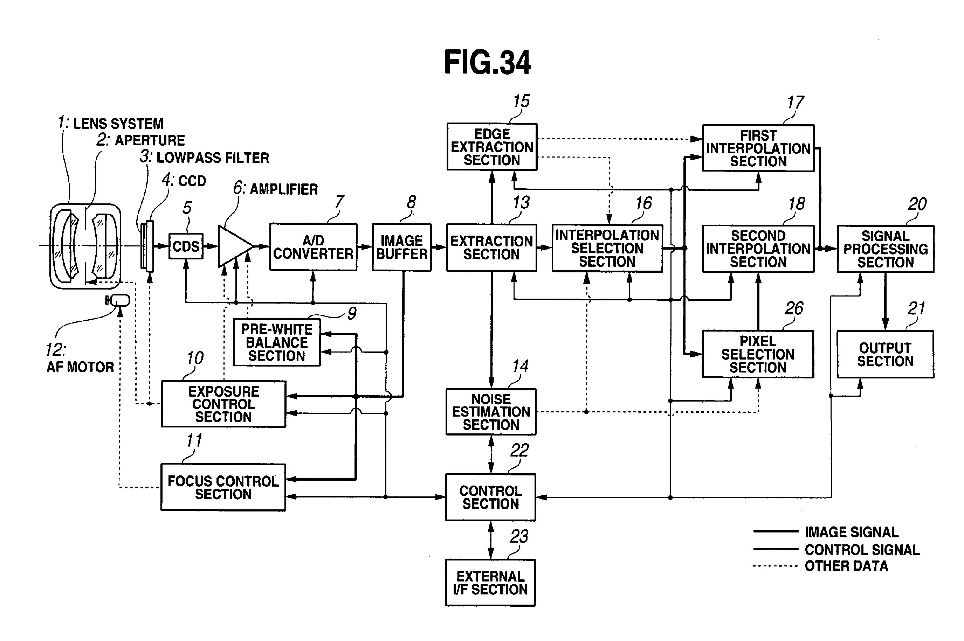

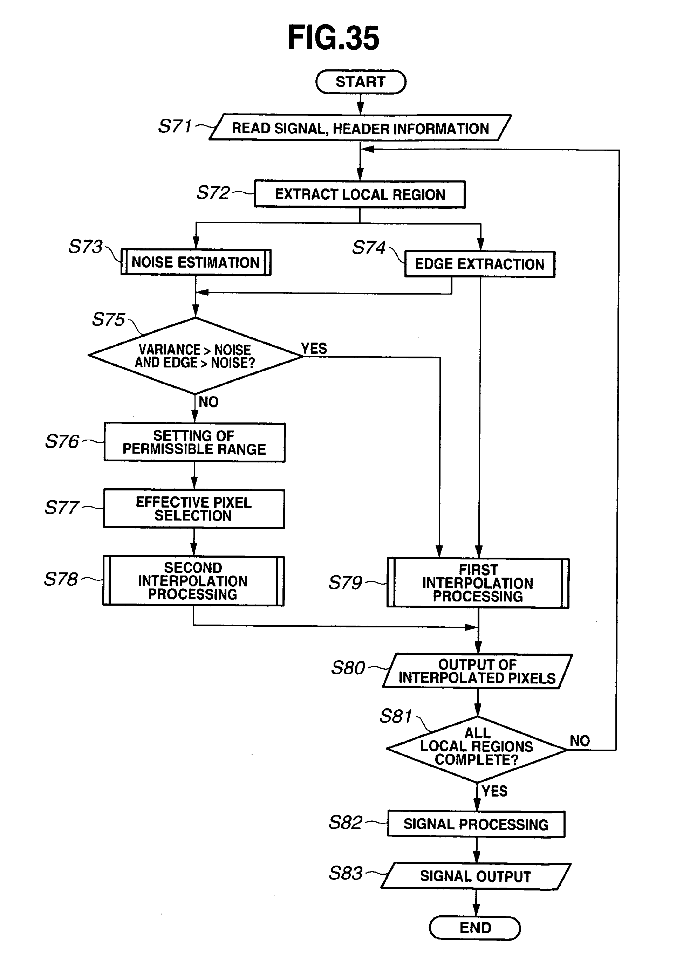

Figs. 34 and 35 show the third embodiment of the present invention. Fig. 34 is a block diagram showing the constitution of the imagepickup system and Fig. 35 is a flow chart of processing by the image processing program.

In the third embodiment, the same numerals are assigned to the parts that are the same as in the abovementioned first and second embodiment and a description of such parts is omitted. Only the differences are mainly described.

The constitution of the image pickup system of the third embodiment is basically substantially the same as the constitution shown in Fig. 1 of the first embodiment above. The third interpolation section 19 has been removed from the constitution of Fig. 1 and the pixel selection section 26 has been added.

That is, the interpolation selection section 16 selects either the first interpolation section 17, or the second interpolation section 18 via the pixel selection section 26. The pixel selection section 26 acquires the noise amount estimated by the noise estimation section 14 and selects whether or not a pixel is effective. The results of the selection by the pixel selection section 26 are transferred to the second interpolation section 18.

The control section 22 is also bidirectionally connected to the pixel selection section 26 in order to control the part.

Mainlyparts that differ from those of the first embodiment will be described in keeping with the flow of signals in the operation of the image pickup system shown in Fig. 34.

The extraction section 13 extracts the image signal in the image buffer 8 in predetermined region units on the basis of the control of the control section 22 and transfers the image signal to the noise estimation section 14, edge extraction section 15, and interpolation selection section 16 respectively.

The noise estimation section 14 estimates, for each of the color signals, the noise amount with respect to regions transferred by the extraction section 13 on the basis of the control of the control section 22 and transfers the estimated results to the interpolation selection section 16 and pixel selection section 26.

On the other hand, the edge extraction section 15 calculates the edge intensities in predetermined directions with respect to the predetermined region transferred from the extraction section 13 on the basis of the control of the control section 22 and transfers the calculated results to the interpolation selection section 16 and the first interpolation section 17.

On the basis of the control of the control section 22, the interpolation selection section 16 judges whether the predetermined region is effective or ineffective in the interpolation processing on the basis of the noise amount from the noise estimation section 14, the edge intensities from the edge extraction section 15, and the variance of the respective internally calculated color signals, and selects either the first interpolation section 17, or the second interpolation section 18 via the pixel selection section 26.

Here, when the first interpolation section 17 is selected, the interpolation selection section 16 transfers the image signal of a predetermined region from the extraction section 13 to the first interpolation section 17.

The first interpolation section 17 performs edge-direction-based interpolation processing on the image signal of the predetermined region thus transferred and transfers the interpolated image signal to the signal processing section 20.

Further, when the interpolation selection section 16 has selected the second interpolation section 18, the image signal of a predetermined region from the extraction section 13 is transferred to the pixel selection section 26.

The pixel selection section 26 sets the permissible range as shown in the abovementioned equation 47, for example, on the basis of the noise amount and average value of the respective color signals as well as the abovementioned second embodiment and labels pixels within the permissible range effective pixels and pixels outside the permissible range ineffective pixels respectively. The pixel selection section 26 transfers the labeled signals to the second interpolation section 18.

The second interpolation section 18 performs color-correlation-based interpolation processing by using effective pixels selected by the pixel selection section 26 and transfers the interpolated signals to the signal processing section 20.

The subsequent processing of the signal processing section 20 and output section 21 and so forth is the same as in the abovementioned first embodiment.

Furthermore, in the above description, it is assumed that the processing is performed by hardware. However, the present invention is not necessarily limited to such a configuration. For example, it would also be possible to output the image signals from the CCD4 are taken as raw data in an unprocessed state, and information from the control section 22 such as the temperature of the CCD4 and the gain of the amplifier 6 at the time of shooting and so on are added to the raw data as header information. After that, processing can be performed by means of an image processing program which is special software on an external computer or the like.

The interpolation processing by the image processing program will now be described with reference to Fig. 35.

When the processing is started, first the source signal constituting Raw data, and header information are read (step S71) and the source signal is extracted with predetermined local region serving as a unit (step S72).

The noise amount of the extracted predetermined region is then estimated (step S73). The noise amount estimated in step S73 is transferred to the processing of step S75 (described subsequently).

Meanwhile, the edge intensities are calculated for the predetermined region extracted in step S72 (step S74). In substantially the same way as the first embodiment, the edge intensities calculated as shown in equation 1 are transferred to the processing of step S75 (described subsequently) and the edge intensities calculated by equation 2 and 3 are transferred to the processing of step S79 (described subsequently).

The noise amount of the local region calculated in step S73 above, the maximum value among the plurality of edge intensities calculated in step S74 above, and the variance of the respective color signals are compared (step S75). In step S75, when 'variance>noise amount' and 'the maximum value of the edge intensities>noise amount' is true for all the color signals, it is assumed that the region is a region with an effective edge structure and the processing branches off to step S79 (described subsequently) and, in other cases, it is assumed that the region is a flat section and the processing branches to the second interpolation processing of step S76 (described subsequently) .

When the processing branches in step S75, the upper limit Aup_S and lower limit Alow_S of the permissible range as shown in the abovementioned equation 47 are set by using the noise, amount estimated by means of the processing of step S73 (step S76).

Subsequently, each of the color signals in the predetermined region extracted in step S72 is selected as being that of an effective pixel or an ineffective pixel on the basis of the permissible range set in step S76 (step S77).

Color-correlation-based interpolation processing is performed by using signals of pixels selected as effective pixels in step S77 (step S78).

Meanwhile, when it is judged in step S75 that the region is a region with an effective edge structure, edge-direction-based first interpolation processing is performed by using the edge intensities extracted by means of step S74 (step S79).

Signals interpolated by the second interpolation processing of step S78 above or signals interpolated by the first interpolation processing of step S79 above are output (step S80).

Thereafter, it is judged whether the interpolation processing of the local regions of all the source signals is complete (step S81) and, in cases where the processing has not been completed, the processing returns to the abovementioned step S72, and the abovementioned processing is repeated for the next local region.

Further, when it is judged in step S81 that processing of local regions of all the source signals is complete, publicly known emphasis processing and compression processing and so forth are performed (step S82) and the processed signals are output (step S83), whereupon the processing is terminated.

The third embodiment affords effects that are substantially the same as in the abovementioned first and second embodiment and, because a plurality of interpolation methods based on an estimated noise amount are switched by estimating the noise amount from the source signals in the neighborhood of the target pixel, and pixels are selected based on the estimated noise amount in at least one interpolation method, the optimum interpolation processing that takes the effects of noise into a consideration and is not affected by noise is performed and a high quality image signal can be obtained.

Furthermore, various types of parameters such as the signal level and the gain and the like are determined dynamically for each shooting operation, and the amount of noise is calculated on thebasis of these parameters, the noise amount canbe estimated highly accurately by dynamically adapting to different conditions for each photograph.

In addition, weighting coefficients that are inversely proportional to the edge intensities are found on the basis of the edge intensities of a plurality of directions and multiplied by interpolated signals of a plurality of directions before performing interpolation processing to produce an interpolated signal of the target pixel from the total value of the multiplied interpolated signals and, therefore, highly accurate interpolation processing can be performed for regions with a structure in a specified direction.

Furthermore, because a correlation between color signals in a predetermined region is determined as a linear equation and interpolation processing that finds an interpolated signal from the linear equation is performed, highly accurate interpolation processing can be performed in regions consisting of a single color phase.

Further, because it is judged whether a predetermined region is suited to interpolation processing (effective or ineffective) on the basis of the statistic and noise amount of the predetermined region, the capability of separating regions with an effective edge structure from flat regions increases and the optimum interpolation method that is not susceptible to the effects of noise can be selected.

Further, because it is judged whether a predetermined region is suited to interpolation processing (effective or ineffective) on the basis of the noise amount and threshold value of the predetermined region, the capabilityof separating regions with an effective edge structure from flat regions increases and the optimum interpolation method that is not susceptible to the effects of noise can be selected. Furthermore, when a comparison with a threshold value is performed, there is the advantage that the processing speed can be raised.

Further, because it is judged whether a pixel is suited to interpolation processing (effective or ineffective) from the permissible range based on the noise amount of the predetermined region and the average value of the color signal, the capability of separating the pixels that belong to an effective edge structure from pixels belonging to a flat region improves, whereby optimum interpolation processing from which the effects of noise are removed can be performed.

In addition, because the selection of the pixels used in the interpolationprocessing canbe desirablyperformedmanually, it is possible to follow the aims of the user relating to interpolation processing with a greater degree of freedom and the processing time can be shortened and the power consumption can be reduced.

Moreover, it is understood that the present invention is not limited to the embodiments above and that a variety of modifications and applications are possible within the scope of the invention without departing from the spirit thereof.

**Claims**

1. An image pickup system for processing an image signal where each pixel is composed of more than one color signals and at least one of the color signals are dropped out according to the location of the pixel, comprising:

   extraction means for extracting a plurality of local regions including a target pixel from the image signal;
   noise estimation means for estimating the noise amount for each local region extracted by the extraction means;
   a plurality of interpolation means for interpolating, by means of mutually different interpolation processing, missing color signals of the target pixel;
   interpolation selection means for selecting which of the plurality of interpolation means is to be used on the basis of the noise amount estimated by the noise estimation means.

**2.** An image pickup system for processing an image signal where each pixel is composed of more than one color signals and at least one of the color signals are dropped out according to the location of the pixel, comprising:

extraction means for extracting one or more local regions including a target pixel from the image signal;
noise estimation means for estimating the noise amount for each local region extracted by the extraction means;
interpolation means for interpolating, by means of interpolation processing, missing color signals of the target pixel; and
pixel selection means for selecting pixels to be used in the interpolation processing of the interpolation means on the basis of the noise amount estimated by the noise estimation means.

**3.** An image pickup system for processing an image signal where each pixel is composed of more than one color signals and at least one of the color signals are dropped out according to the location of the pixel, comprising:

extraction means for extracting a plurality of local regions including a target pixel from the image signal;
noise estimation means for estimating the noise amount for each local region extracted by the extraction means;
a plurality of interpolation means for interpolating, by means of mutually different interpolation processing, missing color signals in the target pixel; and
interpolation pixel selection means for selecting which of the plurality of interpolation means is used, and for selecting pixels to be used in the interpolation processing of at least one of the plurality of interpolation means on the basis of the noise amount estimated by the noise estimation means.

**4.** The image pickup system according to claim 1, 2 or 3, further comprising:

an image pickup element system that generates the image signal and, if necessary, amplifies the image signal, wherein the noise estimation means is constituted comprising:
separation means for separating the image signal of the local regions into each of the predetermined number of color signals;
parameter calculation means for calculating, as a parameter, at least one of the average value of the respective color signals separated by the separation means, the temperature of the image pickup element system, and the gain of the amplification of the image signal obtained by the image pickup system; and
noise amount calculation means for calculating, for each of the predetermined number of color signals, the noise amount of the color signal on thebasis of the parameter calculated by the parameter calculation means.

**5.** The image pickup system according to claim 4, wherein the noise amount calculation means calculates, for each of the predetermined number of color signals, the noise amount $N$ of the color signals by using, as parameters, the average value $L$ of the respective color signals, the temperature $T$ of the image pickup element system, and the gain $G$ of the amplification of the image signal by the image pickup element system, the noise amount calculation means being constituted comprising:

supply means for supplying standard parameter values for the parameters not obtained by the parameter calculation means among the average value $L$, the temperature $T$, and the gain $G$;
coefficient calculation means for calculating, by using three functions $a(T,G)$, $b(T,G)$, and $c(T,G)$ with the temperature $T$ and the gain $G$ as the parameters, coefficients $A$, $B$, and $C$ that correspond with the three functions respectively; and
function computation means for computing the noise amount $N$ on the basis of a first functional equation $N=AL^{B}+C$ or a second functional equation $N=AL^{2}+BL+C$ by using the three coefficients $A$, $B$, and $C$ found by the coefficient calculation means.

**6.** The image pickup system according to claim 4, wherein the noise amount calculation means calculates, for each of the predetermined number of color signals, the noise amount $N$ of the color signals by using, as parameters, the average value of the respective color signals, the temperature of the image pickup element system, and the gain of the amplification of the image signal by the image pickup element system, the noise amount calculation means being constituted comprising:

supply means for supplying standard parameter values for the parameters not obtained by the parameter calculation means among the average value, temperature, and the gain; and
lookup table means for finding the noise amount on the basis of the average value, the temperature, and the gain obtained by the parameter calculation means or the supply means.

**7.** The image pickup system according to claim 1, 2 or 3, further comprising:

edge extraction means for extracting edge intensities related to a plurality of predetermined directions centered on the target pixel within the local regions,
wherein the interpolation means is constituted comprising:
weighting calculation means for calculating, with respect to each of the predetermined directions, a normalized weighting coefficient by using the edge intensities related to the plurality of predetermined directions extracted by the edge extraction means;
interpolation signal calculation means for calculating interpolated signals related to the plurality of predetermined directions centered on the target pixel within the local regions; and
computation means for computing missing color signals of the target pixel on the basis of the plurality of weighting coefficients related to the predetermined directions and the interpolated signals related to the predetermined directions.

**8.** The image pickup system according to claim 1, 2, or 3, wherein the interpolation means is constituted comprising correlation calculation means for calculating, as a linear equation, the correlation between the respective color signals in the local regions; and
computation means for computing missing color signals of the target pixel from the image signal on the basis of the correlation calculated by the correlation calculation means.

**9.** The image pickup system according to claim 1 or 3, wherein the interpolation means is constituted comprising computation means for computing missing color signals of the target pixel by performing linear interpolation or cubic interpolation within the local regions.

**10.** The image pickup system according to claim 1, wherein the interpolation selection means is constituted comprising:

comparing means for comparing the noise amount estimated by the noise estimation means and a predetermined statistic obtained from the respective color signals of the local regions; and
labeling means for performing labeling to indicate whether the local regions are effective or ineffective on the basis of the result of the comparison by the comparing means; wherein
the interpolation selection means selects which of the plurality of interpolation means is to be used in accordance with the label provided by the labeling means.

**11.** The image pickup system according to claim 1, wherein the interpolation selection means is constituted comprising:

comparing means for comparing the noise amount estimated by the noise estimation means and a predetermined threshold value; and
labeling means for performing labeling to indicate whether the local regions are effective or ineffective on the basis of the result of the comparison by the comparing means; wherein
the interpolation selection means selects which of the plurality of interpolation means is to be used in accordance with the label provided by the labeling means.

**12.** The image pickup system according to claim 2, wherein the pixel selection means is constituted comprising:

permissible range setting means for setting the permissible range on the basis of the noise amount estimated by the noise estimation means and the average value of the respective color signals; and
labeling means for performing labeling to indicate whether the respective pixels in the local regions are effective or ineffective on the basis of the permissible range; wherein
the pixel selection means selects the pixels to be used in the interpolation processing of the interpolation means in accordance with the label provided by the labeling means.

**13.** The image pickup system according to claim 3, wherein the interpolation pixel selection means is constituted comprising:

comparing means for comparing the noise amount estimated by the noise estimation means and a predetermined statistic obtained from the respective color signals of the local regions;
permissible range setting means for setting the permissible range on the basis of the noise amount and the average value of the respective color signals; and

labeling means for performing labeling to indicate whether the local regions are effective or ineffective and for performing labeling to indicate whether each of the pixels in the local regions is effective or ineffective, on the basis of the result of the comparison by the comparing means and the permissible range set by the permissible range setting means; and

the interpolation pixel selection means selects which of the plurality of interpolation means is used and selects the pixels to be used in the interpolation processing of at least one of the plurality of interpolation means, in accordance with the label provided by the labeling means.

14. The image pickup system according to claim 3, wherein the interpolation pixel selection means is constituted comprising:

comparing means for comparing the noise amount estimated by the noise estimation means and a predetermined threshold value;

permissible range setting means for setting the permissible range on the basis of the noise amount and the average value of the respective color signals; and

labeling means for performing labeling to indicate whether the local regions are effective or ineffective and for performing labeling to indicate whether the respective pixels in the local regions are effective or ineffective, on the basis of the result of the comparison by the comparing means and the permissible range set by the permissible range setting means; wherein

the interpolation pixel selection means selects which of the plurality of interpolation means is to be used and selects the pixels to be used in the interpolation processing in at least one of the plurality of interpolation means, in accordance with the label provided by the labeling means.

15. The image pickup system according to claim 1 or 3, further comprising:

control means for performing control to allow the plurality of interpolation means to be desirably selected and to cause missing color signals to be interpolated by means of the selected interpolation means.

16. The image pickup system according to claim 15, wherein the control means is constituted comprising information acquiring means for acquiring at least one of image quality information and photographic mode information related to the image signal.

17. The image pickup system according to claim 2 or 3, further comprising:

control means for controlling the interpolation means to allow the pixels to be used in the interpolation processing of the interpolation means to be desirably selected and to cause missing color signals to be interpolated by means of the selected pixels.

18. An image processing program which causes a computer to execute for processing an image signal where each pixel is composed of more than one color signals and at least one of the color signals are dropped out according to the location of the pixel, wherein the image processing program causes the computer to function as:

extraction means for extracting a plurality of local regions including a target pixel from the image signal;

noise estimation means for estimating the noise amount for each local region extracted by the extraction means;

a plurality of interpolation means for interpolating, by means of mutually different interpolation processing, missing color signals of the target pixel; and

interpolation selection means for selecting which of the plurality of interpolation means is to be used on the basis of the noise amount estimated by the noise estimation means.

19. An image processing program which causes a computer to execute for processing an image signal where each pixel is composed of more than one color signals and at least one of the color signals are dropped out according to the location of the pixel, wherein the image processing program causes the computer to function as:

extraction means for extracting one or more local regions including a target pixel from the image signal;

noise estimation means for estimating the noise amount for each local region extracted by the extraction means;

interpolation means for interpolating, by means of interpolation processing, missing color signals of the target pixel; and

pixel selection means for selecting the pixels to be used in the interpolation processing of the interpolation means on the basis of the noise amount estimated by the noise estimation means.

20. An image processing program which causes a computer to execute for processing an image signal where each pixel is composed of more than one color signals and at least one of the color signals are dropped out according to the location of the pixel, wherein the image processing program causes the computer to function as:

extraction means for extracting a plurality of local regions including a target pixel from the image signal;
noise estimation means for estimating the noise amount for each local region extracted by the extraction means;
a plurality of interpolation means for interpolating, by means of mutually different interpolation processing, missing color signals of the target pixel; and
interpolation pixel selection means for selecting which of the plurality of interpolation means is to be used and for selecting the pixels to be used in the interpolation processing of at least one of the plurality of interpolation means, on the basis of the noise amount estimated by the noise estimation means.

21. The image processing program according to claim 18, wherein the interpolation selection means comprises:

comparing means for comparing the noise amount estimated by the noise estimation means and a predetermined statistic obtained from the respective color signals of the local regions; and
labeling means for performing labeling to indicate whether the local regions are effective or ineffective on the basis of the result of the comparison by the comparing means; wherein
the interpolation selection means causes a computer to select which of the plurality of interpolation means is to be used in accordance with the label provided by the labeling means.

22. The image processing program according to claim 18, wherein the interpolation selection means comprises:

comparing means for comparing the noise amount estimated by the noise estimation means and a predetermined threshold value; and
labeling means for performing labeling to indicate whether the local regions are effective or ineffective on the basis of the result of the comparison by the comparing means; wherein
the interpolation selection means causes a computer to select which of the plurality of interpolation means is to be used in accordance with the label provided by the labeling means.

23. The image processing program according to claim 19, wherein the pixel selection means comprises:

permissible range setting means for setting the permissible range on the basis of the noise amount estimated by the noise estimation means and the average value of the respective color signals; and
labeling means for performing labeling to indicate whether the respective pixels in the local regions are effective or ineffective on the basis of the permissible range; wherein
the interpolation selection means causes a computer to select the pixels to be used in the interpolation processing of the interpolation means in accordance with the label provided by the labeling means.

24. The image processing program according to claim 20, wherein the interpolation pixel selection means comprises:

comparing means for comparing the noise amount estimated by the noise estimation means and a predetermined statistic obtained from the respective color signals of the local regions;
permissible range setting means for setting the permissible range on the basis of the noise amount and the average value of the respective color signals; and
labeling means for performing labeling to indicate whether the local regions are effective or ineffective and for performing labeling to indicate whether the respective pixels in the local regions are effective or ineffective, on the basis of the result of the comparison by the comparing means and the permissible range set by the permissible range setting means; wherein
the interpolation pixel selection means causes a computer is caused to select which of the plurality of interpolation means is used and to select the pixels are to be used in the interpolation processing of at least one of the plurality of interpolation means, in accordance with the label provided by the labeling means.

25. The image processing program according to claim 20, wherein the interpolation pixel selection means comprises:

comparing means for comparing the noise amount estimated by the noise estimation means and a predetermined threshold value;

permissible range setting means for setting the permissible range on the basis of the noise amount and the average value of the respective color signals; and

labeling means for performing labeling to indicate whether the local regions are effective or ineffective and for performing labeling to indicate whether the respective pixels in the local regions are effective or ineffective, on the basis of the result of the comparison by the comparing means and the permissible range set by the permissible range setting means; wherein

the interpolation pixel selection means causes a computer to select which of the plurality of interpolation means is to be used and to select the pixels to be used in the interpolation processing of at least one of the plurality of interpolation means, in accordance with the label provided by the labeling means.

# FIG.1

1: LENS SYSTEM
2: APERTURE
3: LOWPASS FILTER
4: CCD
5 CDS
6: AMPLIFIER
7 A/D CONVERTER
8 IMAGE BUFFER
9 PRE-WHITE BALANCE SECTION
10 EXPOSURE CONTROL SECTION
11 FOCUS CONTROL SECTION
12: AF MOTOR
13 EXTRACTION SECTION
14 NOISE ESTIMATION SECTION
15 EDGE EXTRACTION SECTION
16 INTERPOLATION SELECTION SECTION
17 FIRST INTERPOLATION SECTION
18 SECOND INTERPOLATION SECTION
19 THIRD INTERPOLATION SECTION
20 SIGNAL PROCESSING SECTION
21 OUTPUT SECTION
22 CONTROL SECTION
23 EXTERNAL I/F SECTION

——— IMAGE SIGNAL
——— CONTROL SIGNAL
------- OTHER DATA

EP 1 718 081 A1

41

## FIG.2

## FIG.3

## FIG.4

## FIG.5

# FIG.6

# FIG.7

# FIG.8

EP 1 718 081 A1

—— IMAGE SIGNAL
—— CONTROL SIGNAL
------ OTHER DATA

*14:* NOISE ESTIMATION SECTION

# FIG.9

NOISE AMOUNT (N)

SIGNAL LEVEL (L)

# FIG.10

# FIG.11

A = a (T, G)

COEFFICIENT (A)

TEMPERATURE (T)

GAIN (G)

# FIG.12

B = b (T, G)

COEFFICIENT (B)

TEMPERATURE (T)

GAIN (G)

# FIG.13

C = c (T, G)

COEFFICIENT (C)

TEMPERATURE (T)

GAIN (G)

# FIG.14

Legend:
- ── IMAGE SIGNAL
- ── CONTROL SIGNAL
- ····· OTHER DATA

16: INTERPOLATION SELECTION SECTION

13 EXTRACTION SECTION

41 BUFFER

42 SWITCHING SECTION

17 FIRST INTERPOLATION SECTION

43 VARIANCE CALCULATION SECTION

18 SECOND INTERPOLATION SECTION

14 NOISE ESTIMATION SECTION

44 COMPARATOR

45 LABELING SECTION

19 THIRD INTERPOLATION SECTION

15 EDGE EXTRACTION SECTION

22 CONTROL SECTION

EP 1 718 081 A1

# FIG.15

EP 1 718 081 A1

Legend:
- ───── IMAGE SIGNAL
- ───── CONTROL SIGNAL
- ------- OTHER DATA

17: FIRST INTERPOLATION SECTION

15 EDGE EXTRACTION SECTION

16 INTERPOLATION SELECTION SECTION

22 CONTROL SECTION

51 BUFFER

55 G EDGE EXTRACTION SECTION

56 WEIGHTING CALCULATION SECTION

57 WEIGHTING BUFFER

52 INTERPOLATION SECTION

53 INTERPOLATED VALUE BUFFER

54 COMPUTATION SECTION

20 SIGNAL PROCESSING SECTION

## FIG.16

| $R_{22}$ | $G_{32}$ | $R_{42}$ | $G_{52}$ | $R_{62}$ | $G_{72}$ |
|---|---|---|---|---|---|
| $G_{23}$ | $B_{33}$ | $G_{43}$ | $B_{53}$ | $G_{63}$ | $B_{73}$ |
| $R_{24}$ | $G_{34}$ | $R_{44}$ | $G_{54}$ | $R_{64}$ | $G_{74}$ |
| $G_{25}$ | $B_{35}$ | $G_{45}$ | $B_{55}$ | $G_{65}$ | $B_{75}$ |
| $R_{26}$ | $G_{36}$ | $R_{46}$ | $G_{56}$ | $R_{66}$ | $G_{76}$ |
| $G_{27}$ | $B_{37}$ | $G_{47}$ | $B_{57}$ | $G_{67}$ | $B_{77}$ |

## FIG.17

| | | $R_{42}$ | | |
|---|---|---|---|---|
| | | $G_{43}$ | | |
| $R_{24}$ | $G_{34}$ | $R_{44}$ | $G_{54}$ | $R_{64}$ |
| | | $G_{45}$ | | |
| | | $R_{46}$ | | |

## FIG.18

| | | $B_{53}$ | | |
|---|---|---|---|---|
| | | $G_{54}$ | | |
| $B_{35}$ | $G_{45}$ | $B_{55}$ | $G_{65}$ | $B_{75}$ |
| | | $G_{56}$ | | |
| | | $B_{57}$ | | |

## FIG.19

| | $B_{33}$ $G_{33}$ | | $B_{53}$ $G_{53}$ | |
|---|---|---|---|---|
| $R_{24}$ $G_{24}$ | | $R_{44}$ $G_{44}$ | | $R_{64}$ $G_{64}$ |
| | $B_{35}$ $G_{35}$ | $G_{45}$ $G_{55}$ | $B_{55}$ $G_{55}$ | |
| $R_{26}$ $G_{26}$ | | $R_{46}$ $G_{46}$ | | $R_{66}$ $G_{66}$ |
| | $B_{37}$ $G_{37}$ | | $B_{57}$ $G_{57}$ | |

## FIG.20

| | R42 G42 | | R62 G62 | |
|---|---|---|---|---|
| B33 G33 | | B53 G53 | | B73 G73 |
| | R44 G44 | G54 | R64 G64 | |
| B35 G35 | | B55 G55 | | B75 G75 |
| | R46 G46 | | R66 G66 | |

## FIG.21

| B33 G33 | | B53 G53 |
|---|---|---|
| | R44 G44 | |
| B35 G35 | | B55 G55 |

## FIG.22

| R44 G44 | | R64 G64 |
|---|---|---|
| | B55 G55 | |
| R46 G46 | | R66 G66 |

# FIG.23

——— IMAGE SIGNAL
——— CONTROL SIGNAL
-------- OTHER DATA

*18:* SECOND INTERPOLATION SECTION

*16*
INTERPOLATION SELECTION SECTION

*22*
CONTROL SECTION

*61*
BUFFER

*62*
CORRELATION CALCULATION SECTION

*63*
COMPUTATION SECTION

*20*
SIGNAL PROCESSING SECTION

# FIG.24

——— IMAGE SIGNAL
——— CONTROL SIGNAL
-------- OTHER DATA

*19:* THIRD INTERPOLATION SECTION

*16*
INTERPOLATION SELECTION SECTION

*22*
CONTROL SECTION

*71*
BUFFER

*72*
RB LINEAR INTERPOLATION SECTION

*73*
G CUBIC INTERPOLATION SECTION

*20*
SIGNAL PROCESSING SECTION

# FIG.25

START

S1 — READ SIGNAL, HEADER INFORMATION

S2 — EXTRACT LOCAL REGION
(BASIC BLOCKS)

S3 — NOISE ESTIMATION

S4 — EDGE EXTRACTION

S5

RECTANGULAR
BLOCK
VARIANCE > NOISE AND
EDGE > NOISE?

YES

NO

S6 — SECOND
INTERPOLATION
PROCESSING

S7

UPPER, LOWER,
LEFT, RIGHT BLOCKS
VARIANCE > NOISE AND
EDGE > NOISE?

NO

YES

S8 — FIRST
INTERPOLATION
PROCESSING

S9 — THIRD
INTERPOLATION
PROCESSING

S10 — OUTPUT OF
INTERPOLATED PIXELS

S11

ALL
LOCAL REGIONS
COMPLETE?

NO

YES

S12 — SIGNAL PROCESSING

S13 — SIGNAL OUTPUT

END

# FIG.26

```
        ┌─────────────────────┐
        │       NOISE         │
        │    ESTIMATION       │
        └─────────────────────┘
                  │
                  ▼ ◄──────────────────┐
S21 ─┤ EXTRACTION OF LOCAL REGION │   │
     │ (RECTANGLE, UPPER, LOWER,  │   │
     │    LEFT, RIGHT BLOCKS)     │   │
                  │                    │
                  ▼                    │
S22 ─┤ COLOR SIGNAL SEPARATION    │   │
                  │                    │
                  ▼                    │
S23 ─┤ AVERAGE LEVEL CALCULATION  │   │
                  │                    │
                  ▼                    │
S24 ─┤ PARAMETER SETTING          │   │
                  │                    │
                  ▼                    │
S25 ─┤ READ NOISE PARAMETERS      /   │
                  │                    │
                  ▼                    │
S26 ─┤ NOISE AMOUNT CALCULATION   │   │
                  │                    │
                  ▼                    │
S27 ─    ◇ ALL LOCAL REGIONS    NO ───┘
          COMPLETE? ◇
                  │ YES
                  ▼
        ┌─────────────────────┐
        │        END          │
        └─────────────────────┘
```

# FIG.27

```
            ┌─────────────────────────┐
            │   FIRST INTERPOLATION   │
            │       PROCESSING        │
            └─────────────────────────┘
                        │
                        ▼
S31 ──┤      COLOR SIGNAL SEPARATION       │
                        │
                        ▼
S32 ──┤      WEIGHTING CALCULATION         │
                        │
                        ▼
S33 ──┤  INTERPOLATED VALUE CALCULATION    │
       │     ACCORDING TO DIRECTION         │
                        │
                        ▼
S34 ──┤      G PIXEL INTERPOLATED          │
       │      VALUE CALCULATION             │
                        │
                        ▼
S35 ──┤   EDGE EXTRACTION ACCORDING        │
       │         TO DIRECTION               │
                        │
                        ▼
S36 ──┤    CALCULATION OF WEIGHTING        │
                        │
                        ▼
S37 ──┤   CALCULATION OF INTERPOLATED      │
       │   VALUES ACCORDING TO DIRECTION    │
                        │
                        ▼
S38 ──┤      R,B PIXEL INTERPOLATED        │
       │      VALUE CALCULATION             │
                        │
                        ▼
                 (    END    )
```

# FIG.28

```
        ┌─────────────────────────────┐
        │   SECOND INTERPOLATION      │
        │        PROCESSING           │
        └─────────────────────────────┘
                      │
                      ▼
S41 ─┤   COLOR SIGNAL SEPARATION      │
                      │
                      ▼
S42 ─┤   CORRELATION COEFFICIENT      │
     │        CALCULATION             │
                      │
                      ▼
S43 ─┤   INTERPOLATION COMPUTATION    │
                      │
                      ▼
              ┌──────────────┐
              │     END      │
              └──────────────┘
```

# FIG.29

1: LENS SYSTEM
2: APERTURE
3: LOWPASS FILTER
4: CCD
6: AMPLIFIER

12: AF MOTOR

— IMAGE SIGNAL
— CONTROL SIGNAL
-------- OTHER DATA

# FIG.30

| C₀₀ | Y₁₀ | C₂₀ | Y₃₀ | C₄₀ | Y₅₀ |
|-----|-----|-----|-----|-----|-----|
| $C_{00}$ | $Y_{10}$ | $C_{20}$ | $Y_{30}$ | $C_{40}$ | $Y_{50}$ |
| $G_{01}$ | $M_{11}$ | $G_{21}$ | $M_{31}$ | $G_{41}$ | $M_{51}$ |
| $C_{02}$ | $Y_{12}$ | $C_{22}$ | $Y_{32}$ | $C_{42}$ | $Y_{52}$ |
| $G_{03}$ | $M_{13}$ | $G_{23}$ | $M_{33}$ | $G_{43}$ | $M_{53}$ |
| $C_{04}$ | $Y_{14}$ | $C_{24}$ | $Y_{34}$ | $C_{44}$ | $Y_{54}$ |
| $G_{05}$ | $M_{15}$ | $G_{25}$ | $M_{35}$ | $G_{45}$ | $M_{55}$ |

# FIG.31

EP 1 718 081 A1

**14: NOISE ESTIMATION SECTION**

Legend:
- ——— IMAGE SIGNAL
- ——— CONTROL SIGNAL
- ------- OTHER DATA

```
  13                          31            32              33
┌──────────┐            ┌────────┐    ┌──────────┐   ┌──────────┐
│EXTRACTION│───────────▶│ BUFFER │───▶│  SIGNAL  │──▶│ AVERAGE  │
│ SECTION  │            │        │    │SEPARATION│   │CALCULATION│
└──────────┘            └────────┘    │ SECTION  │   │ SECTION  │
                                      └──────────┘   └──────────┘

  22                      34
┌──────────┐       ┌─────────────────┐
│ CONTROL  │◀─────▶│GAIN CALCULATION │
│ SECTION  │       │    SECTION      │
└──────────┘       └─────────────────┘

                 35                     39                    26
          ┌────────────────┐      ┌───────────┐      ┌──────────────┐
          │STANDARD VALUE  │─────▶│NOISE TABLE│·····▶│PIXEL SELECTION│
          │SUPPLY SECTION  │      │           │      │   SECTION    │
          └────────────────┘      └───────────┘      └──────────────┘
```

# FIG.32

26: PIXEL SELECTION SECTION

IMAGE SIGNAL
CONTROL SIGNAL
OTHER DATA

*13*

EXTRACTION
SECTION

*81*

BUFFER

*82*

PIXEL
LABELING
SECTION

*18*

SECOND
INTERPOLATION
SECTION

*14*

NOISE
ESTIMATION
SECTION

*83*

PERMISSIBLE RANGE
CALCULATION
SECTION

*22*

CONTROL
SECTION

EP 1 718 081 A1

# FIG.33

```
                    ( START )
                        |
                        v
S51 ──/ READ SIGNAL, HEADER INFORMATION /
                        |
                        v
S52 ──[ EXTRACT LOCAL REGION ]
          |                      |
          v                      |
S53 ──[| NOISE ESTIMATION |]     |
          |                      |
          v                      |
S54 ──[ SETTING OF               |
        PERMISSIBLE RANGE ]       |
          |                      |
          v                      v
S55 ──[ EFFECTIVE
        PIXEL SELECTION ]
                |
                v
S56 ──[| SECOND
         INTERPOLATION
         PROCESSING |]
                |
                v
S57 ──/ OUTPUT OF
        INTERPOLATED PIXELS /
                |
                v
S58 ── < ALL
         LOCAL REGIONS    > ── NO ──┐
         COMPLETE?                   │
                |                     │
               YES                    │
                v                     │
S59 ──[ SIGNAL PROCESSING ]           │
                |
                v
S60 ──/ SIGNAL OUTPUT /
                |
                v
            ( END )
```

# FIG.34

EP 1 718 081 A1

# FIG.35

```
                    ( START )
                        │
                        ▼
S71 ──/ READ SIGNAL, HEADER INFORMATION /
                        │
                        ▼
S72 ──┌─────────────────────────┐
      │   EXTRACT LOCAL REGION   │
      └─────────────────────────┘
        │                     │
        ▼                     ▼
S73 ┌──────────────┐   S74 ┌──────────────────┐
    ║ NOISE ESTIMATION ║       │ EDGE EXTRACTION  │
    └──────────────┘       └──────────────────┘
        │                         │
        ▼                         │
S75 ◇ VARIANCE > NOISE        YES │
    ◇ AND EDGE > NOISE? ──────────┤
        │ NO                      │
        ▼                         │
S76 ┌──────────────────┐          │
    │    SETTING OF     │          │
    │ PERMISSIBLE RANGE │          │
    └──────────────────┘          │
        │                         │
        ▼                         │
S77 ┌──────────────────┐          │
    │ EFFECTIVE PIXEL   │          │
    │    SELECTION      │          │
    └──────────────────┘          │
        │                         ▼
        ▼                 S79 ┌──────────────────┐
S78 ║     SECOND       ║         ║      FIRST       ║
    ║  INTERPOLATION   ║         ║  INTERPOLATION   ║
    ║   PROCESSING     ║         ║   PROCESSING     ║
    └──────────────────┘         └──────────────────┘
                    │                 │
                    └──────────┬──────┘
                               ▼
              S80 ──/    OUTPUT OF          /
                  /  INTERPOLATED PIXELS   /
                               │
                               ▼
              S81 ◇      ALL                  NO
                  ◇  LOCAL REGIONS     ──────────
                  ◇   COMPLETE?
                               │ YES
                               ▼
              S82 ┌────────────────────┐
                  │  SIGNAL PROCESSING │
                  └────────────────────┘
                               │
                               ▼
              S83 ──/   SIGNAL OUTPUT      /
                               │
                               ▼
                           ( END )
```

## INTERNATIONAL SEARCH REPORT

| | International application No. |
|---|---|
| | PCT/JP2005/002263 |

A.  CLASSIFICATION OF SUBJECT MATTER
Int.Cl⁷  H04N9/07

According to International Patent Classification (IPC) or to both national classification and IPC

B.  FIELDS SEARCHED

Minimum documentation searched (classification system followed by classification symbols)
Int.Cl⁷  H04N9/04-9/11

Documentation searched other than minimum documentation to the extent that such documents are included in the fields searched
Jitsuyo Shinan Koho        1922-1996   Toroku Jitsuyo Shinan Koho   1994-2005
Kokai Jitsuyo Shinan Koho  1971-2005   Jitsuyo Shinan Toroku Koho   1996-2005

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 7-236147 A  (Sanyo Electric Co., Ltd.), 05 September, 1995 (05.09.95), Full text; all drawings (Family: none) | 1-25 |
| A | JP 11-220745 A  (Sony Corp.), 10 August, 1999 (10.08.99), Full text; all drawings (Family: none) | 1-25 |
| A | JP 08-298670 A  (Eastman Kodak Co.), 12 November, 1996 (12.11.96), Full text; all drawings & US 5506619 A        & EP 732858 A2 & DE 69628866 T | 1-25 |

☒  Further documents are listed in the continuation of Box C.     ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 May, 2005 (17.05.05) | 14 June, 2005 (14.06.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

65

## INTERNATIONAL SEARCH REPORT

| | International application No. |
|---|---|
| | PCT/JP2005/002263 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-103466 A  (Fujifilm Microdevices Co., Ltd., Fuji Photo Film Co., Ltd.), 13 April, 1999 (13.04.99), Full text; all drawings & US 6563537 B1 | 1-25 |
| P,A | JP 2005-12479 A  (Sharp Corp.), 13 January, 2005 (13.01.05), Full text; all drawings (Family: none) | 1-25 |
| A | JP 2003-153290 A  (ST Microelectronics S.r.l.), 23 May, 2003 (23.05.03), Full text; all drawings & US 2003/48368 A1        & EP 1289309 A1 | 1-25 |
| A | JP 2002-314999 A  (Nikon Corp.), 25 October, 2002 (25.10.02), Full text; all drawings & US 2002/181791 A1       & EP 1322116 A2 | 1-25 |
| A | JP 2002-354348 A  (Ricoh Co., Ltd.), 06 December, 2002 (06.12.02), Full text; all drawings & US 2002/196353 A1 | 1-25 |
| A | JP 2000-23173 A  (Eastman Kodak Japan Ltd.), 21 January, 2000 (21.01.00), Full text; all drawings (Family: none) | 1-25 |
| P,A | JP 2004-128985 A  (Olympus Corp.), 22 April, 2004 (22.04.04), Full text; all drawings (Family: none) | 1-25 |

Form PCT/ISA/210 (continuation of second sheet) (January 2004)

## REFERENCES CITED IN THE DESCRIPTION

### Patent documents cited in the description

- JP H7236147 A
- JP H8298670 A
- JP H11220745 A